# EUROPEAN PATENT APPLICATION

(11) **EP 3 121 737 A1**
(43) Date of publication of application: **25.01.2017**
(21) Application number: 16171167.6
(22) Date of filing: 24.05.2016
(51) Int. Cl.: G06F 17/30

(54) **DISPLAY APPARATUS AND CONTROL METHOD THEREOF**

(30) Priority: 21.07.2015 KR 20150103283
(71) Applicant: Samsung Electronics Co., Ltd., Gyeonggi-do 16677 (KR)
(72) Inventor: KIM, Hyo-muk, Gyeonggi-do (KR); PARK, Seong-jin, Gyeonggi-do (KR); EO, So-yoon, Gyeonggi-do (KR); JEONG, Seung-yeon, Seoul (KR); CHOI, Yeon-seok, Seoul (KR); KANG, Tae-hun, Daejeon (KR); LEE, Kwan-min, Seoul (KR); LEE, Hye-jeong, Seoul (KR)
(74) Representative: Appleyard Lees IP LLP

(57) **Abstract**

A display apparatus including a display, a communication unit configured to communicate with a plurality of terminal devices and receive image contents from the plurality of terminal devices, a storage configured to store the received image contents, and a processor configured to classify the stored image content according to a predetermined criterion and display the image contents through the display.

## Description

### CROSS-REFERENCE TO RELATED APPLICATIONS

This application claims priority from Korean Patent Application No. 10-2015-0103283, filed on July 21, 2015, in the Korean Intellectual Property Office, the disclosure of which is incorporated herein by reference in its entirety.

### BACKGROUND

### 1. Field

Apparatuses and methods consistent with exemplary embodiments relate to a display apparatus and a control method thereof, and more particularly, to a display apparatus which can receive a content from a terminal device and display the content.

### 2. Description of the Related Art

As portable devices are increasingly used and the personal media content generated in the portable devices increases, services for storing such media content and services for managing and enjoying stored media content are also increasing.

An example of such a service is a cloud service, which enables a large scale high-performance computer connected through the Internet to provide a web storage space (server) of a predetermined capacity. This allows users to easily store and use various content, such as documents, music, videos, etc., through smart phones, tablets, portable media players, or Personal Computers (PCs).

Various attempts to enable a plurality of users to share media content with one another have been made. In most of the services supporting the sharing of the media content, the contents stored in a PC or a mobile terminal device are transmitted by way of an email, a Short Message Service (SMS), a messenger service, etc., on an individual content basis.

In recent years, there are services for uploading content onto a cloud service and sharing the content with other users. For example, a user, who has a different account from an uploading account, can be authorized to access a sharing folder provided by the cloud service, and may upload or download files to the folder.

However, such a sharing method requires that the user having a different account uploads or downloads contents onto or from a corresponding sharing folder of a folder tree. This sharing method may limit the enjoyment of sharing content due to lengthy and confusing procedures for the plurality of users to access the sharing folder. Due to this, there may be a problem that users' demands are not easily satisfied. In addition, since an account for using a cloud service needs to be generated and then the data moved and copied through interworking connection of users and/or a network, there may be difficulties creating barriers to usage.

For example, a family may wish to easily collect photos taken by the respective devices of family members of a travel site and view a travel album made of the photos through a TV. However, in the related-art cloud service, the family members may have difficulty in generating user accounts for the cloud server on their respective devices, logging in, and then providing content through the cloud service.

### SUMMARY

The present disclosure provides a method for allowing a plurality of users to easily share media content with one another and allowing the users to enjoy content produced in various forms by processing shared content.

One or more embodiments of the present disclosure provide a display apparatus including a display panel, a communicator configured to communicate with a plurality of terminal devices, the communicator configured to receive image content from the plurality of terminal devices, a storage configured to store the received image content, and a processor configured to classify the stored image content according to a predetermined criterion and output the classified image content through the display panel.

In some exemplary embodiments, the display apparatus includes wherein the processor is configured to insert the classified image content into a template configured in an album format comprising thumbnail images for a user to select an image content, and display the classified image content.

In some exemplary embodiments, the display apparatus includes wherein the predetermined criterion is set based on content information included in the image contents.

Some exemplary embodiments of the display apparatus include wherein the content information comprises at least one of a photographing date of the image content, a photographing place of the image content, information on face recognition included in the image content, a comment tagged with the image content, information on an object recognized in the image content, and identification information of each device which transmits the image content.

Exemplary embodiments may further include wherein the predetermined criterion is set based on information added to the image content by the display apparatus.

Some exemplary embodiments of the display apparatus include wherein the added information comprises at least one of a time at which the image content is accessed, and a number of times of accessing the image content.

Some exemplary embodiments of the display apparatus include wherein the storage comprises a map configuration module configured to configure a map to display the image content through a map image or a map application, and wherein the processor is configured to execute the map configuration module stored in the storage to display the map image or the map application having a range of a predetermined region, and display the image content on areas corresponding to the photographing places of the image content on the displayed map image or map application.

In some exemplary embodiments, the display apparatus includes wherein the predetermined region is set or changed by the user.

Exemplary embodiments may further include wherein the processor is configured to generate a channel identification number, allocate the channel identification number to the classified image content, and, in response to the channel identification number being selected by the user, control to display the classified image content on a virtual channel corresponding to the channel identification number.

Some exemplary embodiments of the display apparatus include wherein, in response to the channel identification number being selected by the user, the processor is configured to control to display a plurality of screens in which at least one of the stored image content is inserted into a predetermined template on the virtual channel as a slide show.

Exemplary embodiments may further include wherein the processor is configured to display the stored image content as thumbnail images comprising identifiers distinguished from one another according to terminal devices which have transmitted the image content.

Some exemplary embodiments of the display apparatus include wherein, in response to the stored image content or the template into which the image content are inserted being selected by the user, the processor is configured to display an editing screen for editing the selected image content or template, edit the selected image content or template according to a user command, and store the edited image content or template in the storage.

One or more embodiments include a control method of a display apparatus including receiving image content from a plurality of terminal devices, storing the received image content, classifying the stored image content according to a predetermined criterion, and displaying the classified image content.

In some exemplary embodiments, the control method includes wherein the displaying the classified image content comprises inserting the classified image content into a template configured in an album format comprising thumbnail images for a user to select an image content, and displaying the classified image content.

In some exemplary embodiments, the control method includes wherein the predetermined criterion is set based on content information included in the image contents.

Exemplary embodiments may further include wherein the content information comprises at least one of a photographing date of the image content, a photographing place of the image content, information on face recognition included in the image content, a comment tagged with the image content, information on an object recognized in the image content, and identification information of each device which transmits the image content.

Some exemplary embodiments of the control method include wherein the predetermined criterion is set based on information added to the image content by the display apparatus.

Some exemplary embodiments of the control method include wherein the added information comprises at least one of a time at which the image content is accessed, and a number of times of accessing the image content.

Exemplary embodiments may further include wherein the displaying the classified image content comprises displaying a map image or a map application having a range of a predetermined region by executing a pre-stored map configuration module, and displaying the image content on areas corresponding to the photographing places of the image content on the displayed map image or map application.

In some exemplary embodiments, the control method includes wherein the predetermined region is set or changed by the user.

Exemplary embodiments may further include wherein the displaying the classified image content includes generating a channel identification number, allocating the channel identification number to the classified image content, and, in response to the channel identification number being selected by the user, displaying the classified image content on a virtual channel corresponding to the channel identification number.

Some exemplary embodiments of the control method include wherein the displaying the classified image content through the channel identification number comprises, in response to the virtual channel being selected by the user, displaying a plurality of screens in which at least one of the stored image content is inserted into a predetermined template on the virtual channel as a slide show.

Exemplary embodiments may further include wherein the displaying the classified image content comprises displaying the stored image content as thumbnail images comprising identifiers distinguished from one another according to terminal devices which have transmitted the image content.

In some exemplary embodiments, the control method includes receiving a command to select the stored image content or a template into which the image content are inserted, displaying an editing screen for editing the image content or template selected according to the command to select, editing the selected image content or template according to a user command, and storing the edited image content or template.

### BRIEF DESCRIPTION OF THE DRAWINGS

The above and/or other aspects of the present disclosure will be more apparent by describing certain exemplary embodiments of the present disclosure with reference to the accompanying drawings, in which:
FIG. 1 is a block diagram schematically illustrating a configuration of a display apparatus according to an exemplary embodiment;
FIG. 2 is a view illustrating a display apparatus which receives image contents from a plurality of terminal devices according to an exemplary embodiment;
FIG. 3 is a block diagram showing a configuration of a storage according to an exemplary embodiment;
FIGS. 4 and 5 are views illustrating a method for selecting an image content to be transmitted from a terminal device to a display apparatus according to various exemplary embodiments;
FIGS. 6A and 6B are views illustrating a screen of a display apparatus which displays received image contents according to various exemplary embodiments;
FIG. 7A is a view illustrating a method for adding a comment to an image content to be transmitted from a terminal device to a display apparatus according to an exemplary embodiment;
FIG. 7B is a view illustrating a method for displaying an image content to which a comment is added by the display apparatus according to an exemplary embodiment;
FIG. 8 is a view illustrating a screen for informing that an album has been produced according to an exemplary embodiment;
FIG. 9 is a view illustrating an album screen according to an exemplary embodiment;
FIG. 10 is a view showing a screen on which a photo selected from the album screen is displayed according to an exemplary embodiment;
FIG. 11 is a view illustrating a main screen through which an album is selected according to an exemplary embodiment;
FIGS. 12A and 12B are views illustrating a screen which is configured by a template of a map format according to an exemplary embodiment;
FIG. 13 is a view illustrating a method for displaying image contents which are configured by various templates on a virtual channel according to an exemplary embodiment;
FIG. 14 is a view showing an editing screen for editing a variation content according to an exemplary embodiment;
FIGS. 15 to 18 are views illustrating image contents which are configured by various templates and are displayed on a virtual channel according to an exemplary embodiment;
FIG. 19 is a view illustrating a display apparatus which receives image contents from a plurality of terminal devices according to another exemplary embodiment;
FIG. 20 is a view illustrating a configuration of a CMS server according to an exemplary embodiment;
FIG. 21 is a flowchart illustrating a process of displaying an album content or a variation content in which image contents are classified according to a predetermined criterion according to an exemplary embodiment;
FIG. 22 is a flowchart illustrating a process of displaying an album content or a variation content in which image contents are classified according to a predetermined criterion according to another exemplary embodiment;
FIG. 23 is a block diagram illustrating a configuration of a display apparatus in detail according to another exemplary embodiment;
FIG. 24 is a block diagram showing a configuration of a system module of a storage according to an exemplary embodiment; and
FIG. 25 is a flowchart illustrating a control method of a display apparatus according to an exemplary embodiment.

### DETAILED DESCRIPTION OF THE EXEMPLARY EMBODIMENTS

Hereinafter, exemplary embodiments will be explained in detail with reference to the accompanying drawings.

The exemplary embodiments of the present disclosure may be modified in various ways. Accordingly, specific exemplary embodiments are illustrated in the drawings and are described in detail in the detailed description. However, it is to be understood that the present disclosure is not limited to a specific exemplary embodiment, but includes all modifications, equivalents, and substitutions without departing from the scope and spirit of the present disclosure. Also, well-known functions or constructions are not described in detail since they would obscure the disclosure with unnecessary detail.

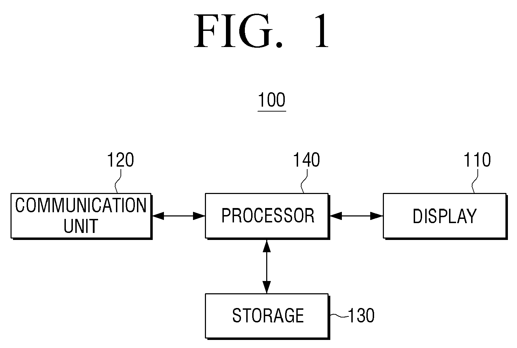

FIG. 1 is a block diagram schematically illustrating a configuration of a display apparatus according to an exemplary embodiment.

Referring to FIG. 1, the display apparatus 100 according to an exemplary embodiment includes a display 110, a communication unit 120, a storage 130, and a processor 140.

The display apparatus 100 may be implemented by using various kinds of devices which can process images, such as a TV, a monitor, a computer, a laptop, a note pad, a tablet PC, a smart phone, a portable terminal, etc.

The display 110 displays images forming various contents. In particular, the display 110 may display image contents which are received in sequence from a plurality of terminal devices under the control of the controller 140, and display a screen in which the received image contents are classified according to a predetermined criterion.

The display 110 may be implemented by using, but not limited to, a Liquid Crystal Display (LCD) panel, an Organic Light Emitting Diode (OLED) panel, etc. In addition, the display 110 may include a driving circuit, a backlight unit, etc. therein, which may be implemented by using an a-si thin film transistor (TFT), a low temperature poly silicon (LTPS) TFT, an organic TFT (OTFT), etc.

The communication unit 120 is configured to communicate with a plurality of terminal devices. The communication unit 120 may communicate with the plurality of terminal devices in various communication methods using Radio Frequency (RF) and Infrared (IR), such as Bluetooth, WiFi, Zigbee, Near Field Communication (NFC), etc. To achieve this, the communication unit 120 may include a Zigbee communication module, a Bluetooth communication module, a BLE communication module, a WiFi communication module, etc.

In particular, the communication unit 120 may receive image contents from the plurality of terminal devices. For example, when being connected with the plurality of terminal devices through the WiFi communication method, the communication unit 120 may receive the image contents stored in the terminal devices from the plurality of terminal devices in sequence.

In addition, the communication unit 120 may recognize a neighboring terminal device located around the display apparatus or recognize a terminal device tagged with a separate NFC communication device through a short-distance wireless communication method such as Bluetooth Low Energy (BLE), NFC, or Zigbee communication element. To achieve this, the display apparatus 100 may display a pop-up message for the user to induce the user to establish a communication session to transmit the image content. Therefore, the communication session may be easily established to transmit the image contents between the display apparatus 100 and the terminal device.

From among the communication modules included in the communication unit 120, a communication module for receiving the image contents may be the same or different from a communication module for transceiving data other than the image contents. When the communication module for receiving the image contents is different from the communication module for transceiving data other than the image contents, the communication module for transceiving data other than the image contents may be the WiFi communication module, and the communication module for receiving the image contents may be the Bluetooth communication module or the BLE communication module.

In addition, the communication unit 120 may be connected through the Internet with an external server to receive various contents for forming a screen from the external server.

The communication unit 120 may receive authentication keys for identifying whether the plurality of terminal devices are registered terminal devices or not. Herein, the registered terminal device refers to a terminal device which is connected with the display apparatus 100 and has its own device information stored in the display apparatus 100 in advance in order to exchange the image contents with the display apparatus 100. Specifically, the communication unit 120 may receive authentication keys such as unique numbers or MAC addresses of the terminal devices from the terminal devices. The processor 140 may determine whether the terminal devices are registered or not based on the received authentication keys.

The storage 130 is configured to store the image contents received from the plurality of terminal devices. The storage 130 may be implemented by using one of a Hard Disk Drive (HDD), a Solid State Drive (SSD), a DRM memory, an SRAM memory, a FRAM memory, or a flash memory.

Displaying a screen in which the image contents are classified according to a predetermined criterion

The processor 140 may control to display the image contents received from the plurality of terminal devices in sequence, classify the image contents according to a predetermined criterion in response to a predetermined event occurring, and display the image contents through the display 110.

The image content may include a visual content in which a text, a photo, a picture, a video, etc. includes a variety of information produced in a digital method. The image content refers to a photo which is photographed in each terminal device unless the specification indicates otherwise. However, the image content is not limited to the photo which is photographed in each terminal device, and may include various image contents including a text, a photo, a picture, a video, etc., which are generated in or downloaded from the terminal device as described above.

In addition, the predetermined criterion refers to a criterion which is set based on content information included in the image content. The content information included in the image content may refer to metadata such as a specific image content photographing date, a specific place, a comment tagged with the image content, face recognition information included in the image content, information on an object recognized from the image content, and device identification information (for example, a product number, etc.).

In addition, the predetermined criterion may refer to a criterion which is set based on information added to the image content in the display apparatus 100 as well as the content information included in the image content. The information added to the image content may refer to information on a time at which the display apparatus 100 accesses the image content and information on the number of times the display apparatus 100 accesses the image content.

In response to the image contents being received from the plurality of terminal devices, the processor 140 stores the image contents in the storage 130. The processor 140 may control reducing the stored image content into the form of a thumbnail of a predetermined size, and displaying the image content. In this case, the processor 140 may output the image content in the form of a thumbnail including an identifier for identifying the terminal device.

The identifier may be a border color of the image content displayed in the form of the thumbnail. For example, the processor 140 may indicate from whom each of the image contents is transmitted by displaying the border of each of the image contents displayed in the form of the thumbnails in a different color.

That is, the processor 140 may distinguish the image contents from one another according to users by adding the identifiers to the image contents. In addition, the processor 140 may distinguish the image contents from one another according to users by displaying different marks on the image contents or around the image contents as identifiers.

Thereafter, in response to a predetermined event occurring, the processor 140 may control to display a screen in which the received image contents are classified according to the predetermined criterion. In this case, the processor 140 may output the image contents by combining the image contents with a template. Herein, the template is a content which is laid out to arrange a predetermined number of image contents on predetermined locations and with a predetermined size.

For example, the screen in which the image contents are classified according to the predetermined criterion may refer to a screen which is configured using a template having a layout, a background or a mark set therein in order to include at least one image content. The screen in which the image contents are classified according to the predetermined criterion may refer to a screen which is configured using a template formed in the form of a map or a template formed in the form of an album in which the image contents are arranged as thumbnail images in order for the user to select an image content.

Specifically, the processor 140 may control the displaying of the thumbnail images of the image contents on locations corresponding to photographing places of the image contents in the template which is formed in the form of a map having a range of a predetermined region using a map configuration module stored in the storage 130.

In addition, the processor 140 may control the inserting of at least one image content file into the template formed in the form of the album, and display the image content file. Herein, the album refers to an electronic album which can be read by sharers in the display apparatus 100. The album may be a content which displays image contents classified according to a predetermined criterion as thumbnail images.

In addition, the predetermined event may refer to an operation of receiving a completion signal indicating that transmission has been completed from one of the plurality of terminal devices after all of the image contents were received from the plurality of terminal devices. In addition, the predetermined event may refer to an operation of terminating all of the communication sessions established between the plurality of terminal devices and the display apparatus 100.

Specifically, the processor 140 may classify the image contents into a plurality of groups according to the predetermined criterion. In addition, the processor 140 may control the inserting of the image contents classified into the plurality of groups into the template formed in the form of the album, and the displaying of the image contents.

Herein, the predetermined criterion may be set based on the content information included in the image content or the information added to the image content. Herein, the content information included in the image content may refer to metadata such as Exchangeable Image File Format (EXIF) information which is stored in the image content file. The EXIF information may include photographing date information of the image content, photographing place information (longitude/latitude) of the image content, file size information of the image content, color information of the image content, and type information of a camera which photographs the image content.

In addition, the additional information may include at least one of upload date information of the image content, a time at which the display apparatus 100 accesses the image content, and the number of times the display apparatus 100 accesses the image content.

The processor 140 may extract the metadata included in the image content and classify the image contents into the plurality of groups according to the predetermined criterion. Herein, the predetermined criterion may refer to a criterion satisfying a specific condition, such as a specific date on which the image content is photographed, a specific place, or information on whether a specific person is included in the image content.

The processor 140 may filter only the image contents satisfying the specific condition from among the received image contents, and map the image contents as a single album, thereby automatically configuring a template in the form of an album.

The processor 140 may classify the image contents which are received from a time at which one of the plurality of terminal devices establishes the communication session with the display apparatus 100 until a time at which all of the communication sessions between the plurality of terminal devices and the display apparatus 100 are terminated into a single group.

For example, in response to an application being executed in a first terminal device from among the plurality of terminal devices, the display apparatus 100 may establish a communication session with the terminal device in which the application is executed, and may connect with the terminal device. Thereafter, a second terminal device from among the plurality of terminal devices may be additionally connected with the display apparatus 100 by executing an application. In this case, the image contents which are received at the display apparatus 100 until all of the communication sessions between the first terminal device and the second terminal device, and the display apparatus 100 are terminated may be classified into a single group. The image contents classified into the single group may be included in a single album.

The processor 140 may edit the image contents which are classified according to the predetermined criterion according to a user command. In response to the stored image content or the template into which the image content is inserted being selected by the user, the processor 140 may output an edit screen for editing the selected image content or template, and may edit the selected image content or template according to the user command. The user may perform an editing operation, such as changing arrangement of the image content or template, adjusting a size, adjusting a location, making a comment, setting an effect, or changing the image content, on the edit screen.

The processor 140 may provide an effect tool and an edit tool for editing on one side of the edit screen to allow the user to edit the image contents which are classified according to the predetermined criterion. In this case, the processor 140 may store information on the edited template or image content in the storage 130.

Enjoying the screen in which the image contents are classified according to the predetermined criterion

The processor 140 may output the screen in which the image contents are classified according to the predetermined criterion or a new screen which is generated through the editing process using a virtual channel. Specifically, the processor 140 may control to generate a channel identification number, allocate the channel identification number such as a channel number to the classified image contents, and display the classified image contents in response to the channel identification number being selected by the user. Herein, a channel through which the classified image contents are displayed may be referred to as a virtual channel. The processor 140 may map the screen in which the image contents are classified according to the predetermined criterion onto the virtual channel, so that the user can easily view the virtual channel by zapping channels in the same way as when the user views a terrestrial broadcast or a cable broadcast.

The processor 140 may allocate the channel identification information such as the channel number to the generated virtual channel, and, in response to the allocated channel number being selected by the user, the user may view the screen in which the image contents are classified according to the predetermined criterion. In this case, the channel number allocated to the virtual channel may be a number within a predetermined range. In this case, the user may enter the virtual channel by using a physical button provided on a remote controller or selecting a UI button displayed on the display apparatus 100.

The processor 140 may manage at least one of an authority of other users to access the virtual channel and an authority of other users to access an image content uploaded on the virtual channel by one user. For example, the processor 140 may require an input such as a password in response to the user accessing the corresponding virtual channel, and may request the terminal device registered at the display apparatus 100 to transmit an authentication key.

According to another exemplary embodiment, a set-top box which is connected with the display apparatus 100 and receives the image contents from the plurality of terminal devices may further be provided. The set-top box refers to a device which is connected with the display apparatus such as a TV, and receives signals from the outside, appropriately converts the signals, and display corresponding contents through the display apparatus. Devices which transmit external signals to the set-top box may include an Ethernet cable, an antenna for receiving waves from a satellite, a coaxial cable, a telephone wire, or a normal VHF or UHF antenna.

The set-top box may receive the image contents from the plurality of terminal devices, and may allocate a virtual channel number to map the screen in which the received image contents are classified according to the predetermined criterion onto a specific virtual channel. The set-top box may be embedded in the display apparatus 100.

In response to the virtual channel being selected by the user through zapping, the processor 140 may control displaying of a plurality of screens in which at least one image content is inserted into a predetermined template on the virtual channel in the form of a slide show. In this case, the plurality of screens may be screens which are configured by predetermined different templates, and the image contents included in the plurality of screens may be different in each of the plurality of screens.

Hereinafter, a content in which image contents is inserted into a predetermined template and which is displayed on the virtual channel in the form of a slide show will be referred to as a variation content.

Herein, the processor 140 may control to extract content information such as metadata which is included in the image content, insert EXIF information included in the extracted metadata or additional information which is added to the image content in the display apparatus 100 into the variation content, and display the variation content. For example, on a certain area of the screen on which the content is displayed in the form of a slide show, the image contents may be displayed with information on photographing dates and photographing places of the corresponding image contents.

The image contents included in the variation content may be classified by a new criterion using the metadata every time the user enters the virtual channel. For example, from among the image contents stored in the display apparatus 100, image contents included in a first album from among a plurality of albums classified into a plurality of groups according to a predetermined criterion may be included in at least one of a plurality of variation contents configured by a predetermined template, and may be displayed as an image of a slide show. Thereafter, in response to the user entering the virtual channel again, image contents included in a second album may be included in at least one of the plurality of variation contents configured by the predetermined template, and may be displayed as an image of a slide show.

In response to a specific user command being inputted on the virtual channel on which the variation content is displayed in the form of the slide show, a main screen through which an album screen or an album can be selected may be displayed.

The album content or variation content which is displayed on the display apparatus 100 may be shared with other display apparatuses. Specifically, in response to an account being registered at the display apparatuses and the registration of the account being completed, the user may select other users to share the content in the display apparatus 100 or the terminal device registered at the display apparatus 100. In response to other users being selected, an invitation message may be received at other display apparatuses or terminal devices of other users registered at other display apparatuses. In this case, in response to other users registered at other display apparatuses accepting the invitation message, the content may be shared among the display apparatuses. When the user of the display apparatus 100 does not wish to share a specific content, the user may set the corresponding content to be private so as not to share the content with other users registered at other display apparatuses.

According to various exemplary embodiments described above, the user can view the image contents in a more interesting and fresh way.

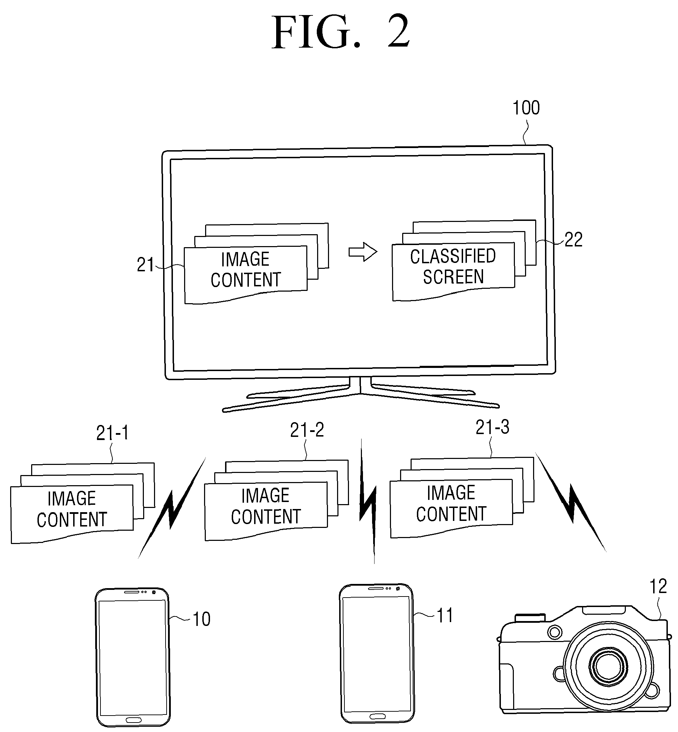

FIG. 2 is a view to illustrate a display apparatus which receives image contents from a plurality of terminal devices according to an exemplary embodiment

As shown in FIG. 2, the plurality of terminal devices 10, 11, and 12 may be connected with the display apparatus 100. The plurality of terminal devices 10, 11, and 12 may be referred to as a first terminal device 10, a second terminal device 11, and a third terminal device 12, respectively.

FIG. 2 illustrates an exemplary embodiment in which the first terminal device 10 and the second terminal device 11 are smart phones, and the third terminal device 12 is a camera.

The first terminal device 10 may be a terminal device of a user who requests to share image contents (for example, Hong Gil-dong), and the second terminal device 11 and the third terminal device 12 may be terminal devices of users who share the image contents with the first terminal device 10 in parallel.

In addition, the second terminal device 11 and the third terminal device 12 may be terminal devices which are requested to share the image contents by the first terminal device 10 regarding the display apparatus 100.

The first terminal device 10 to the third terminal device 12 may be terminal devices which download an application program for providing an image content sharing service from a server providing applications through a network such as wireless Internet or a wireless network, and install the application program.

The user may arrange the image contents such as photo files using the application program installed in the terminal device. In managing the photo files, the user may classify the photo files into folders or albums or store details on the photos as texts. In addition, the user may edit and manage the image contents in various ways, such as combining the photos and various images using the application program or performing geo-tagging with respect to the photos using a location information system provided in the terminal device.

The first terminal device 10 to the third terminal device 12 may be located within a distance where they can communicate with the display apparatus 100. For example, in the case of a BLE communication method, the first terminal device 10 to the third terminal device 12 should be located within a distance from a TV, where they can communicate with the TV through BLE. In particular, in the case of the BLE, a restriction on the distance can be reduced in comparison with BT. On the other hand, in the case of a WiFi communication method, the terminal devices should be located within a distance where WiFi communication can be performed. Therefore, the terminal devices except for a terminal device for manipulating the display apparatus 100 have less restriction on the distance in comparison with the BLE.

The first terminal device 10 to the third terminal device 12 may execute applications installed therein and transmit image contents 21-1, 21-2, 21-3 to the display apparatus 100 in sequence. In response to the application being executed in the first terminal device 10, the first terminal device 10 may establish a communication session with the display apparatus 100. In response to the communication session being established, the display apparatus 100 may execute a specific application corresponding to the application executed in the first terminal device 10 and enter a standby mode to receive the image content from the plurality of terminal devices.

In response to the display apparatus 100 entering the standby mode, the processor 140 may control to execute the application for receiving the image contents and display an image content reception-dedicated screen. The image content reception-dedicated screen is a screen for reducing the image contents 21 received from the plurality of terminal devices 10-30 to a predetermined size (for example, 200x100 mm), and displaying the image contents 21. Through this screen, the user can identify which file the display apparatus 100 receives from the plurality of terminal devices 10-30 in real time.

The plurality of terminal devices 10-30 may transmit the image contents 21-1, 21-2, and 21-3 stored therein to the display apparatus 100 in sequence. In this case, the image contents received from the plurality of terminal devices 10-30 may be stored in the storage 130 of the display apparatus 100 and an external server photo-synchronized with the display apparatus 100.

The image contents 21 may include photo or video files photographed by cameras mounted in the respective terminal devices, and may further include photo, picture or video files stored in the terminal devices through other routes such as downloading.

In response to the image contents 21 being received from the plurality of terminal devices 10-30, the processor 140 may control to store the received image contents in the storage 130 and display the received image contents 21. In this case, the received image contents 21 may be displayed in the form of a reduced thumbnail.

In response to a predetermined event occurring, the processor 140 may control to display a screen 22 in which the received image contents 21 are classified according to a predetermined criterion. Herein, the screen 22 in which the image contents 21 are classified according to the predetermined criterion may be a screen which is configured by a predetermined template. The predetermined template may refer to various UIs which are already designed and stored in the display apparatus 100. The predetermined template may include templates of various formats such as a template of an album format, a template of a map format, a template which is used for a slide show of a variation content, etc.

The processor 140 may classify the image contents 21 into a plurality of groups according to a predetermined criterion using content information included in the image contents 21 or additional information. Herein, the content information may include metadata such as EXIF information, etc. The processor 140 may control to display a template screen in which the groups classified according to the predetermined criterion are arranged in the form of an album.

For example, the processor 140 may classify the image contents 21 according to a photographing place using photographing place information (longitude/latitude) of the EXIF information. In this case, only the image contents having longitude/latitude information of a predetermined range may be grouped and classified into a single group regardless of from which terminal device the image contents 21 are transmitted.

It may be assumed that a first user, a second user, and a third user wish to share photos taken by them with one another after they traveled. It is assumed that the first user, the second user, and the third user traveled at a travel site A on May 1, 2015, traveled at travel sites B and C on May 2, 2015, and then traveled at the travel site A again on May 3, 2015.

In this case, it is assumed that the image content 21-1 that the first terminal device 10 of the first user transmits to the display apparatus 100 includes photos which were taken at the travel site A on May 1, 2015 and photos which were taken at the travel site B on May 2, 2015. Likewise, it is assumed that the image content 21-2 that the second terminal device 11 of the second user transmits to the display apparatus 100 includes photos which were taken at the travel sites B and C on May 2, 2015, and it is assumed that the image content 21-3 that the third terminal device 12 of the third user transmits to the display apparatus 100 includes photos which were taken at the travel site A on May 3, 2015.

In response to the processor 140 classifying the image contents 21 according to the photographing place using the EXIF information of each of the image contents, a first album in which only the photos taken at the travel site A are classified into a single group, a second album in which only the photos taken at the travel site B are classified into a single group, and a third album in which only the photos taken at the travel site C are classified into a single group may be generated.

Herein, the first album may include the photos of the travel site A which are transmitted from the first terminal device 10 and the third terminal device 12. The second album may include the photos of the travel site B which are transmitted from the first terminal device 10 and the second terminal device 20. The third album may include the photos of the travel site C which is transmitted from the second terminal device 20.

The processor 140 may classify the image contents 21 according to a photographing date using photographing date information of the EXIF information. In this case, in response to the display apparatus 100 classifying the image contents 21 according to the photographing date using the EXIF information of each of the image contents, a fourth album in which only the photos taken on May 1, 2015 are classified into a single group, a fifth album in which only the photos taken on May 2, 2015 are classified into a single group, and a sixth album in which only the photos taken on May 3, 2015 are classified into a single group may be generated. In addition, an album in which the photos taken in May 2015, including the fourth album, the fifth album, and the sixth album, are classified into a single may be generated.

The fourth album may include the photos dated May 1, 2015 which are transmitted from the first terminal device 10. The fifth album may include the photos dated May 2, 2015 which are transmitted from the first terminal device 10 and the second terminal device 20. The sixth album may include the photos dated May 3, 2015 which are transmitted from the third terminal device 12.

In addition, the predetermined criterion may include both the photographing place and the photographing date of the image contents. That is, the display apparatus 100 may classify the image contents 21 according to the photographing place and the photographing date using the photographing place information (longitude/latitude) and the photographing date of the EXIF information.

In this case, in response to the processor 140 classifying the image contents 21 according to the photographing place and the photographing date, a seventh album in which only the photos taken at the travel site A on May 1, 2015 are classified into a single group, an eighth album in which only the photos taken at the travel site B on May 2, 2015 are classified into a single group, a ninth album in which only the photos taken at the travel site C on May 2, 2015 are classified into a single group, and a tenth album in which only the photos taken at the travel site A on May 3, 2015 are classified into a single group may be generated.

Herein, the seventh album may include the photos which were taken at the travel site A on May 1, 2015, and which are transmitted from the first terminal device 10. The eighth album may include the photos which were taken at the travel site B on May 2, 2015 and which are transmitted from the first terminal device 10 and the second terminal device 20. The ninth album may include the photos which were taken at the travel site C on May 2, 2015, and which are transmitted from the second terminal device 20. The tenth album may include the photos which were taken at the travel site A on May 3, 2015, and which are transmitted from the third terminal device 12.

In the above-described exemplary embodiments, the image contents classified into the plurality of groups are displayed in templates which are configured in the form of albums. However, the technical idea of the present disclosure is not limited to this, and the image contents may be displayed in various ways to distinguish the plurality of groups from one another.

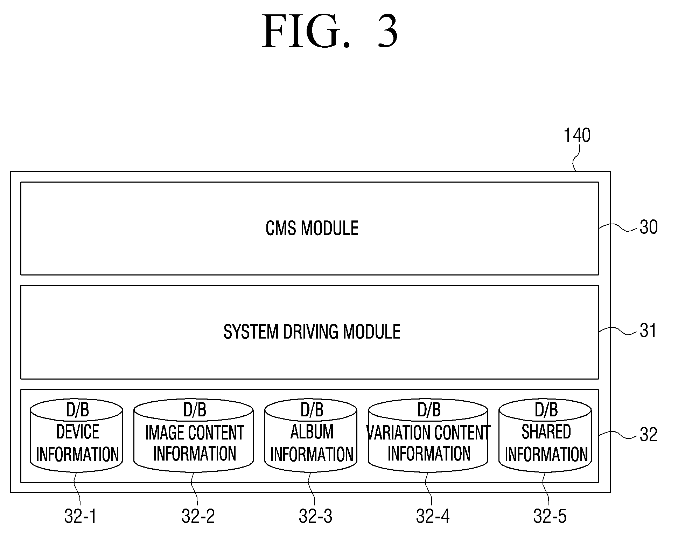

FIG. 3 is a block diagram showing a configuration of a storage according to another exemplary embodiment of the present disclosure.

Referring to FIG. 3, the storage 130 may include a Contents Management System (CMS) module 30, a system driving module 31, and a database 32. The CMS module 30 may include various modules for configuring a screen in which received image contents are classified according to a predetermined criterion, for sharing the screen with a plurality of users, and for providing the screen through a virtual channel.

The system driving module 31 is a module for driving the processor 140.

The database 32 may include a database in which device information 32-1 including user names of terminal devices, image content information 32-2 related to image contents received from terminal devices, album information 32-3 of classified image contents, variation content information 32-4 related to a variation content displayed on a virtual channel, and information 32-5 shared with other users are stored.

Specifically, the CMS module 30 may include ① an album configuration module for configuring an album, ② a data extraction module, ③ an automatic classification module, ④ a variation content generation/editing module, ⑤ a slide show image production module, ⑥ a map configuration module, ⑦ a sharing processing module, ⑧ a content scheduling module, etc.

① The album configuration module is a module for generating an album to share the image contents on an album basis, and managing the album. In response to the user selecting a specific image content and configuring a single album, or in response to a specific image content being classified into a single group according to a predetermined criterion, the album configuration module may be executed to logically group the selected or classified image contents, and store the grouped information in an album information database 32-3. That is, the processor 140 may execute the album configuration module to generate an album with the image contents selected by a user's request or the image contents classified according to the predetermined criterion.

The album configuration module may include a layout configuration module for configuring a layout of an album, an image content uploading module for receiving image contents from terminal devices, an album generation module for generating an album and configuring the background of the album, and a background configuration module.

The image contents may be processed according to a template of a predetermined album format by executing the layout configuration module. The layout configuration module may provide a user edit tool in order for the user to edit the template of the album format. Accordingly, layout information configured by the user's editing may be stored in the album information database 32-3. In this case, the layout information may include information on a size, a location, an aspect ratio, a resolution, a shape, a form, and a direction of the album.

The image contents may be uploaded from the terminal device of the user who wishes to share the mage contents by executing the image content uploading module, and may be stored in an image content information database 32-2. In this case, the user may select specific image content and group them into a single album, and may upload the album.

In addition, the processor 140 may execute ② the data extraction module to extract, from the image contents, data for automatically classifying the image contents stored in the image content information database 32-2 according to a user's selection condition or a predetermined criterion. The data extraction module may include a content information extraction module and an additional information extraction module. The content information included in each of the image content files may be extracted by executing the content information extraction module. The content information may include a photographing date, information on a geographical location where the image contents are photographed such as a photographing place (longitude/latitude), a resolution of the image content file, information on capacity of the image content file, information on face recognition included in the image content, a comment tagged with the image content, identification information of each device which transmits the image content, etc.

The face recognition information refers to identification information indicating who a person in an image content is based on a variety of information analyzed from a face region identified in the image content, such as a face's contour or color. The face recognition information may be generated in the user terminal device, and may be included in the image content and transmitted to the display apparatus 100. In this case, the processor 140 may execute the content information extraction module to extract the content information included in the image content and extract the face recognition information included in the extracted content information, and may classify the image contents.

The processor 140 may directly identify faces of a family or friends from the received photo, and may identify who is included in the photo based on the result of the identifying. In addition, the face recognition information may be information indicating how many people are identified in the image content. The region identified in the image content is not limited to the face and may be predetermined various objects.

A variety of additional information related to the image contents may be additionally extracted by executing the additional information extraction module. The additionally extracted additional information may include an uploading date of the image content, an accessing time, and the number of times of accessing. In this case, color information is a result of analyzing colors included in the image content, and may be used as information for classifying the same kind of image contents.

In addition, the processor 140 may execute ③ the automatic classification module to automatically classify the image contents according to a predetermined criterion or user's settings. In this case, the processor 140 may set a criterion for each classification item, and may filter the image contents according to the set criterion using the information extracted by the data extraction module.

That is, the processor 140 may set the predetermined criterion for items such as an item for classifying according to a photographing date, an item for classifying according to a region, an item for classifying according to a type of terminal device, an item for classifying according to file capacity, an item for classifying according to color information, and an item for classifying according to a face, using the information extracted by the data extraction module.

In addition, the processor 140 may execute ④ the variation content generation/editing module to generate a variation content in which the image contents are configured by a predetermined template, and edit the variation content. Specifically, the processor 140 may execute the variation content generation/editing module to provide the user with various tools for generating the variation content in which the images contents are combined with various template stored in a variation content information database 42-4, and editing the variation content.

In addition, the processor 140 may execute ⑤ the slide show image production module to provide the plurality of variation contents on a virtual channel in the form of a slide show. The plurality of variation contents may be produced by the slide show image production module as various slide show images to which an effect such as toggling between screens, an animation, music, etc. is applied.

In addition, the processor 140 may execute ⑥ the map configuration module to extract information on a photographing place (longitude/latitude) from the EXIF information included in a photographed photo or video through geo-tagging using a GPS embedded in the terminal device. Specifically, the processor 140 may output the image content on an area corresponding to a photographing place of a photo or a video on a map image or an execution screen of a map application having a range of a predetermined region, using the map configuration module for configuring a map to display the image contents through a map image or a map application.

Herein, the predetermined region may be set or changed by the user.

In addition, the processor 140 may execute ⑦ the sharing processing module to provide various functions related to sharing so as to share the image contents received from the plurality of terminal devices and the screens classified according to the predetermined criterion with a plurality of users, and the sharing processing module may include a sharing setting module and a sharer authentication module.

A user who uploads image contents may be set by executing the sharing setting module. Information on the set user (that is, a sharer) may be stored in a shared information database 32-5. Accordingly, the terminal device of the corresponding user may be registered at the display apparatus 100. In addition, who will share an album generated by the image content production module or a variation content may be set by executing the sharing setting module. Accordingly, who will share the image contents may be set according to an album.

It may be determined whether the user who uploads the image contents is a user set as a sharer or not by executing the sharer authentication module. To achieve this, the processor 140 may compare information on the user who requests uploading of the image contents or the terminal device and sharer information stored in the shared information database 32-5, using the sharer authentication module, and determine whether the user is authorized to share the image contents.

In addition, the processor 140 may execute the content scheduling module to arrange and schedule the variation contents on the virtual channel in various ways. The content scheduling module is a module for searching contents, arranging contents, setting a channel, and processing channel sharing. In this case, the variation contents displayed on the virtual channel may include a variation content which is shared after having been produced in another display apparatus 100 connected with the display apparatus 100, as well as an image produced in the display apparatus 100. The variation contents displayed on the virtual channel may be arranged according to priority, and the priority may be allocated in order of a recently produced content, a recently shared content, or a content which is reproduced a small number of times.

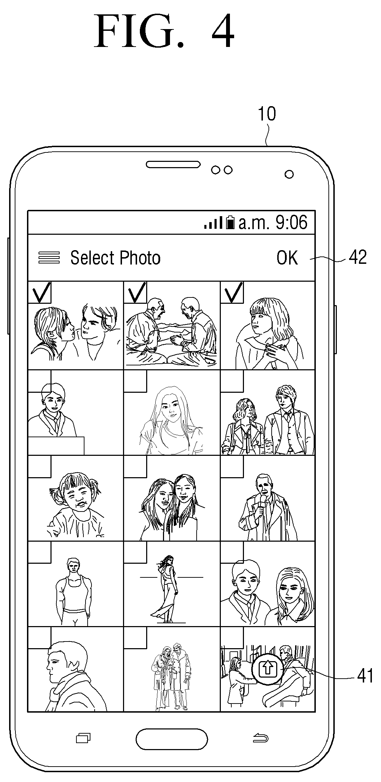

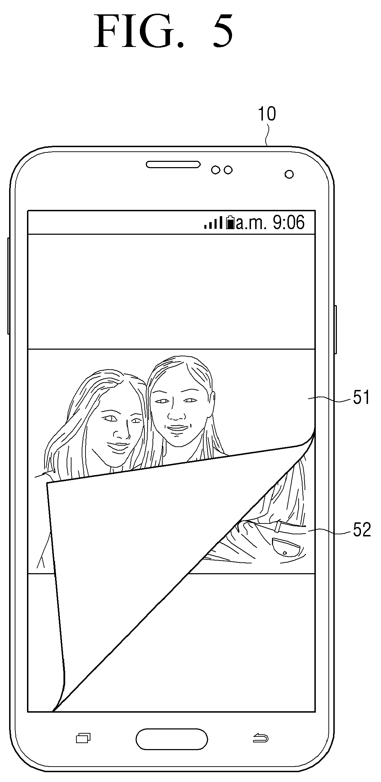

FIGS. 4 and 5 are views to illustrate a method for selecting an image content to be transmitted from a terminal device to a display apparatus according to various exemplary embodiments.

FIG. 4 illustrates a screen displayed on the terminal device 10 in order for the user to select photos to be transmitted to the display apparatus 100 all at once, and transmit the photos. The user may connect the terminal device 10 with the display apparatus 100 by executing an application installed in the terminal device 10, so that a communication session is established. In response to the terminal device 10 being connected with the display apparatus 100, the user may select photos to be shared as shown in FIG. 4, and transmit the selected photos to the display apparatus 100 by touching a transmission icon 41.

In response to all of the photos to be shared being transmitted and there being no more photo to be transmitted, the user may finish the photo transmission process and terminate the communication session by touching an icon 42 indicating that all of the photos have been transmitted. In this case, a touch input on the icon 42 may correspond to an event for classifying the image contents according to a predetermined criterion.

In addition, in response to the communication sessions between other terminal devices and the display apparatus 100 being terminated and only the communication session with the terminal device 10 being activated, the touch on the icon 42 on the terminal device 10 may correspond to the event for classifying the image contents according to the predetermined criterion. That is, the event for classifying the image contents according to the predetermined criterion may occur when the communication sessions of all of the terminal devices with the display apparatus 100 are terminated.

FIG. 5 illustrates a screen displayed on the terminal device 10 in order for the user to select photos to be transmitted to the display apparatus 100 one by one and transmit the photos. As shown in FIG. 5, in response to a flicking operation being performed on a photo 51 displayed on an application, the photo 51 on which the flicking operation is performed may be transmitted to the display apparatus 100. In this case, an effect of turning over the photo 51 on which the flicking operation is performed in the flicking direction may appear on the display 110. In addition, the photo 51 may be transmitted through multi-touch or drag and drop for the sake of user's intuitive transmission. In response to a swiping operation being performed on the photo 51 on the screen of the display apparatus 100 toward an area to display the photo 51, the photo 51 may be displayed on the corresponding area on the screen of the display apparatus 100.

In response to the flicking operation being completed, the flicked photo 51 disappears and the next photo 52 is displayed on the terminal device 10. Likewise, the user may transmit the plurality of photos to the display apparatus 100 in sequence by repeating the flicking operation.

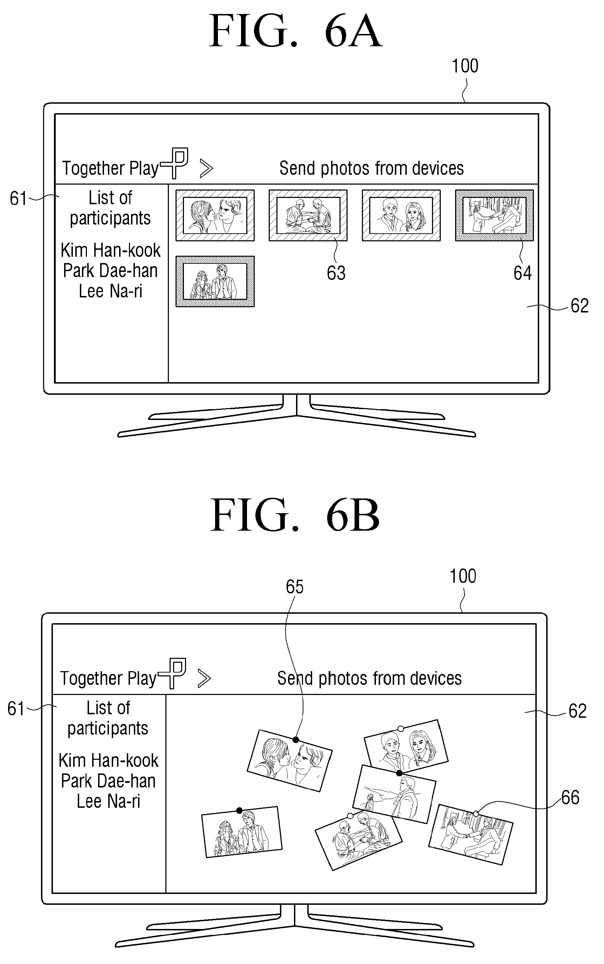

FIGS. 6A and 6B are views to illustrate a screen of a display apparatus which displays received image contents according to various exemplary embodiments.

FIG. 6A illustrates the screen of the display apparatus 100 in which an application for sharing image contents is executed according to an exemplary embodiment. As shown in FIG. 6A, an application execution screen may be divided into an area 61 on which a list of users is displayed and an area 62 on which image contents are displayed.

The area 61 on which the list of users is displayed may display user names of terminal devices connected with the display apparatus 100 as shown in FIG. 6A. The user names may be identification information stored in the corresponding terminal devices, for example, names or email accounts of the users registered at the devices, which are extracted and transmitted to the display apparatus 100. Alternatively, the user names may be identification information of previously connected terminal devices, which are registered at the device information database 32-1 of the display apparatus 100 and then are displayed afterward. The user names may be automatically transmitted to the display apparatus 100 from the terminal devices. However, the user names may be manually inputted by the user when the user wants to. In addition, character icons or images provided by the display apparatus 100 may be mapped onto the user names, such that the character icons or images are substituted for the user names and displayed.

The area 62 on which the image contents are displayed may display the image contents received from the plurality of terminal devices in the form of thumbnail images in order of receiving. In this case, the thumbnail images may include different identifiers to be distinguished from one another according to terminal devices. For example, as shown in FIG. 6A, a border 63 of a thumbnail image of an image content uploaded by a first user and a border 64 of a thumbnail image of an image content uploaded by a second user may be displayed in different colors and thus may be distinguished from each other.

FIG. 6B illustrates the screen of the display apparatus 100 in which an application for sharing image contents is executed according to another exemplary embodiment. As shown in FIG. 6B, on the area 62 on which the image contents received from the plurality of terminal devices are displayed, the thumbnail images of the image contents are distributed randomly. This provides an effect of looking as if real photos are pinned onto a board by the user. Therefore, the user may feel as if the user really shares the photos.

In this case, the thumbnail images of the image contents may include different identifiers to be distinguished from one another according to terminal devices. As shown in FIG. 6B, pin images for the thumbnail images 65, 66 may be displayed in different colors according to terminal devices such that the thumbnail images are distinguished from one another.

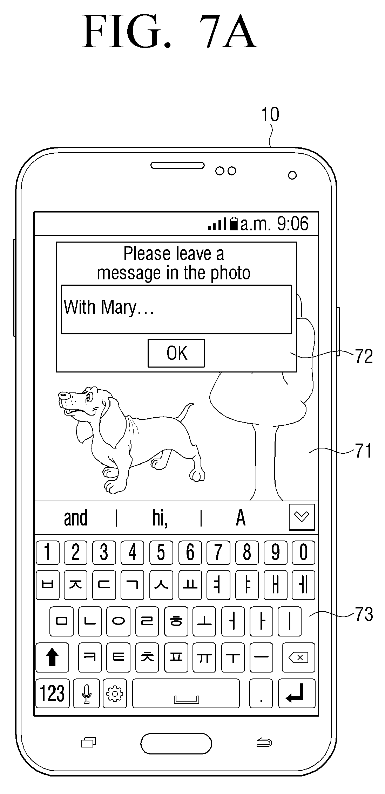

FIG. 7A is a view to illustrate a method for adding a comment to an image content to be transmitted from a terminal device to a display apparatus according to an exemplary embodiment.

As shown in FIG. 7A, the user may add a comment to a photo 71 to be transmitted on the terminal device 10, and transmit the photo 71. Specifically, the user may make a comment on information on who or what is included in the photo 71 or when the photo was taken, or an impression of the photo through a virtual keyboard 73 of the terminal device 10, and may add the comment to the corresponding photo 71. The added comment may be included in the corresponding photo 71 as metadata and transmitted to the display apparatus 100.

For example, as shown in FIG. 7A, the user may input the comment through a comment window 72 for inputting the comment on the photo 71 to be transmitted. In response to the comment window 72 being displayed, the virtual keyboard 73 for inputting the comment may be displayed, and the user may input a comment "with Mary" through the virtual keyboard 73, and the comment may be stored.

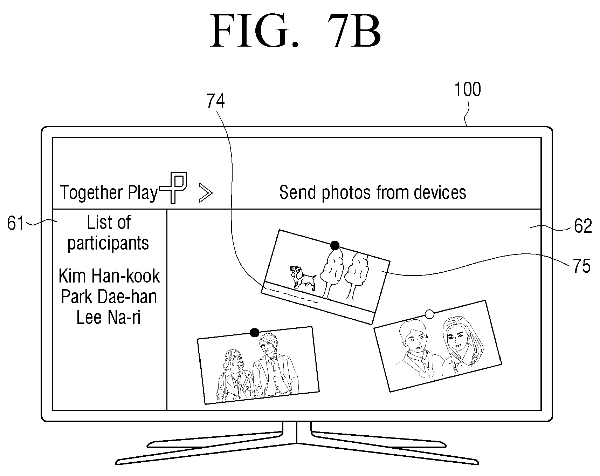

FIG. 7B is a view to illustrate a method for displaying an image content to which a comment is added on the display apparatus according to an exemplary embodiment.

As shown in FIG. 7B, in response to the image content to which the comment is added being received at the display apparatus 100, a thumbnail image 75 of the received image content may be displayed along with a comment 74 added by the user. In FIG. 7B, the comment 74 is displayed on the lower end of the thumbnail image 75.

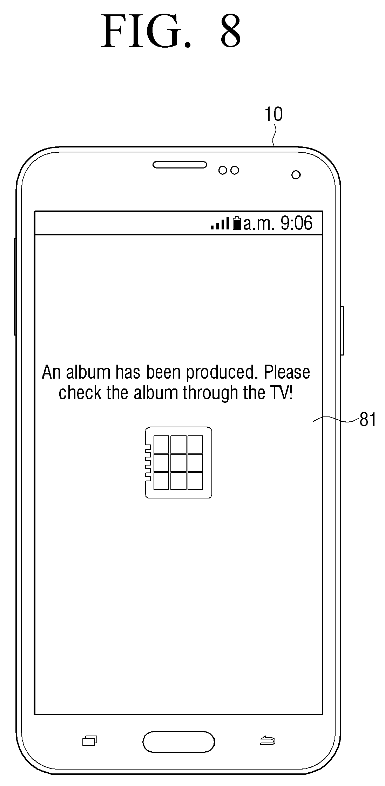

FIG. 8 is a view to illustrate a screen informing that an album has been produced according to an exemplary embodiment.

As shown in FIG. 8, in response to the terminal device 10 finishing the transmission of the image contents and thus terminating the communication session with the display apparatus 100, or in response to a signal informing that a content configured in the form of an album has been generated being received from the display apparatus 100, the terminal device 10 may display a screen 81 informing that the album has been produced.

Herein, the content configured in the form of the album refers to a content having a UI which is generated by classifying the image contents received from the plurality of terminal devices according to a predetermined criterion based on the metadata, and grouping the classified image contents into albums.

The transmission of the image contents may be completed by touching an icon displayed on the screen of the terminal device 10 on which the image contents are displayed and serving as an OK button.

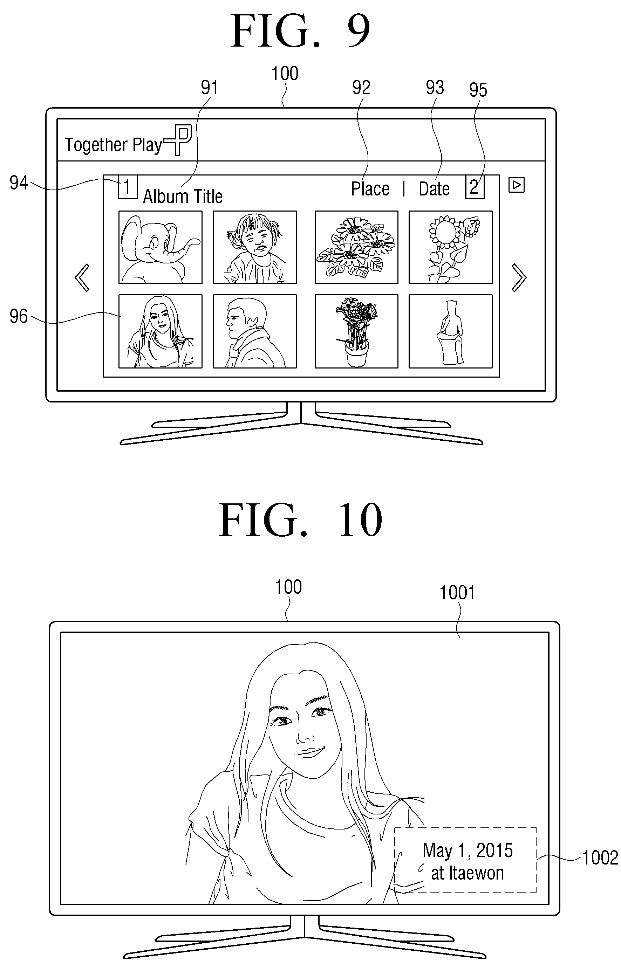

FIG. 9 is a view to illustrate an album screen according to an exemplary embodiment.

As shown in FIG. 9, the image contents received from the plurality of terminal devices may be configured by a template which is mapped in the form of an album, and displayed. In the template designed like an opened album on the displayed screen, a predetermined number of image contents 96 may be allocated to each page, and may be displayed as thumbnail images.

A title 91 of the album may be displayed on the upper end of the left page of the album, and a phrase inputted by the user on the display apparatus 100 or the terminal device 10 or a predetermined album title (album 1, album 2, etc.) may be displayed as the title 91 of the album.

In addition, the title 91 of the album may be common metadata of the image contents, and may be a photographing date or a photographing place. In addition, the title 91 of the album may be a title which is reconfigured based on an album title which is created by the user initially pressing the sharing completion icon 42 from among the plurality of users in the user's terminal device.

At least one piece of information of a photographing place 92 and a photographing date 93 may be displayed on the upper end of the right page of the album as common metadata of the image contents. For example, when all of the uploaded image contents are photos which were taken in Suwon-city, Gyeonggi-do on April 1, 2015, information like "Suwon-city, Gyeonggi-do/ April 1, 2015" may be displayed. When the uploaded image contents are photos which were taken in different places at different photographing dates, information like "Suwon-city, Yongin-city, Gyeonggi-do/April 1, 2015- April 3, 2015" may be displayed or may be divided according to a section and displayed on the screen. In addition, the date or place of the most photographed image contents may be displayed.

In addition, in response to the number of image contents being greater than or equal to a predetermined number, the other image contents may be identified by turning over the pages. In this case, page information 94, 95 indicating currently displayed pages of the album may be displayed on a certain area of each of the pages of the album.

In addition, the image contents included in the template screen configured in the form of the album may be arranged in an ascending order or a descending order of time. In addition, the template screen configured in the form of the album may distinguish the image contents received from the plurality of users according to users and display the image contents.

The display apparatus 100 may distinguish the image contents from one another by displaying the user name of the terminal device which has transmitted the corresponding image content on a certain area near each of the image contents. The image contents may be arranged in the album according to a user who has transmitted the image content, a photographing time, a photographing place, and a person included in the image content, and the arrangement may be changed through an option by the user.

In response to one of the plurality of image contents displayed in the album being selected, the selected image content 1001 may be displayed as a full screen as shown in FIG. 10. In this case, the display apparatus 100 may display information 1002 on a photographing date and a photographing place based on the metadata of the corresponding image content on a certain area of the image content 1001 displayed as the full screen.

In addition, the plurality of image contents displayed in the album may be displayed in sequence in the form of a slide show.

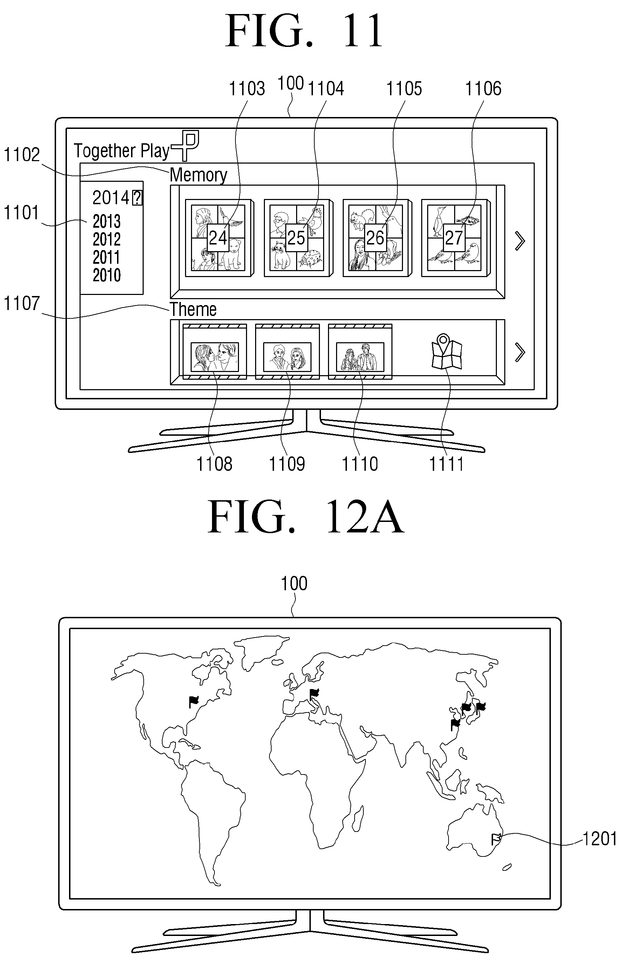

FIG. 11 is a view to illustrate an album selection screen according to an exemplary embodiment.

The album selection screen refers to a main screen for selecting one of a plurality of already generated albums. In response to a predetermined user command being inputted on a virtual channel, the display apparatus 100 may enter the album selection screen.

The albums may be classified by year. Specifically, the display apparatus 100 may generate albums by classifying the image contents by day, month, or year according to photographing dates of the image contents using the metadata included in the image contents, and grouping the image contents into albums.

As shown in FIG. 11, a list 1101 for selecting a photographing year of an album may be displayed on the left of the album selection screen. For example, in response to the user selecting 2014 using a remote control device, albums 1103, 1104, 1105, and 1106 generated by classifying the image contents photographed in 2014 according to a predetermined criterion may be displayed on the right upper end 1102 of the album selection screen. Herein, the albums may be classified by month or day.

In addition, albums configured according to predetermined various themes and an icon for entering a screen in which the image contents are configured by a template of a map format may be displayed on the lower end 1107 of the album selection screen.

The albums configured according to predetermined themes refer to albums which are classified by specific subject based on the metadata of the image contents. For example, the albums configured according to themes may include an album 1108 which is configured based on a subject "Summer vacation in Busan in 2014," an album 1109 which is configured based on a subject "My firstborn's growth record," and an album 1110 which is configured based on a subject "My family one year ago today."

The album 1108 configured based on the subject "Summer vacation in Busan in 2014" may be an album which is generated in the display apparatus 100 by extracting EXIF information on a photographing date and a photographing place from the metadata of the image contents, and grouping only the image contents which were photographed in Busan during a specific period (June-August) of 2014. The display apparatus 100 may analyze GPS data of all of the received image contents, and configure the albums according to a degree of proximity. The range of the photographing place may be adjusted to a country, a province, or a city.

In addition, the album 1109 configured based on the subject "My firstborn's growth record" may be an album which is generated in the display apparatus 100 by grouping only the image contents from which the firstborn's face is recognized using additional information on the face recognition extracted from the metadata of the image contents. In this case, in the album 1109 configured based on the subject "My firstborn's growth record," the image contents may be arranged in order of time/date through the EXIF information on the photographing date extracted from the metadata of the image contents from which the firstborn's face is recognized. Herein, the additional information on the face recognition may be face information of the firstborn which is obtained through face recognition in the terminal device which has transmitted the image contents, and is stored in the metadata. Alternatively, the processor 140 of the display apparatus 100 which stores information on the firstborn's face may recognize a face included in the image contents, compare the face with the pre-stored information on the firstborn's face, and configure the album with only the image contents including the firstborn's face.

The album 1110 configured based on the subject "My family one year ago today" may be an album which is generated in the display apparatus 100 by extracting the EXIF information on the photographing date and additional information on the face recognition from the metadata of the image contents, and grouping only the image contents from which a face of at least one member of the family is recognized from among the image contents photographed one year ago from a current date. For example, when the current date is April 1, 2015, the album 1110 configured based on the subject "My family one year ago today" may be an album which is generated by extracting and grouping only the image contents having the EXIF information indicating April 1, 2014, and by extracting and grouping only the contents including at least one member of the family by recognizing faces included in the image contents. The information on family members' faces may be pre-stored in the storage 130.

In addition, the display apparatus 100 may analyze execution log records of the image contents, extract a predetermined number of image contents which are most frequently executed during a predetermined period or are executed most recently in a descending order, and may group the image contents into a single album. It is obvious that an album may be configured according to various other themes.

In response to one of the plurality of albums being selected by the user, an album content having a UI in which the image contents included in the selected album are displayed in the form of a page of a book may be displayed and also background music may be reproduced at the same time.

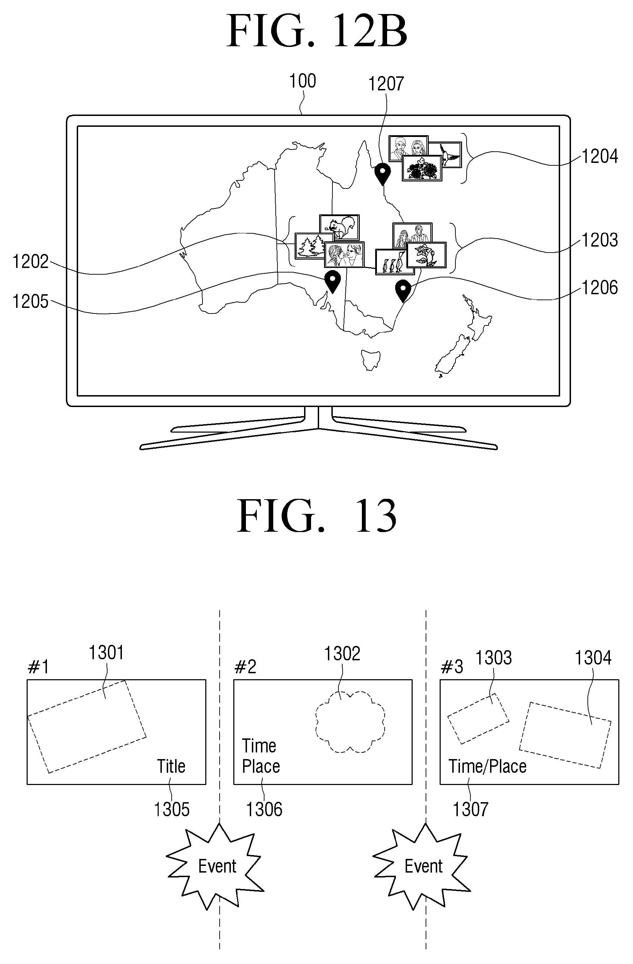

In addition, a specific icon 1111 for entering a screen which is configured by a template formed in the form of a map may be selected on the album selection screen. In response to the specific icon 1111 being selected, the processor 140 may execute the map configuration module stored in the storage 130 based on information extracted from the metadata of the image contents, and control to display the image contents on a map image or an map application having a range of a predetermined region. In this case, the image contents may be displayed on locations corresponding to the photographing places of the image contents. This will be explained in detail below with reference to FIGS. 12A and 12B.

FIGS. 12A and 12B are views to illustrate a template which is configured in the form of a map according to an exemplary embodiment.

The processor 140 of the display apparatus 100 may control to display thumbnail images or specific icons of the image contents on areas corresponding to the photographing places of the image content on the map using the metadata included in the image contents. Herein, the specific icons may be icons in the form of a flag as shown in FIG. 12A.

As shown in FIG. 12A, the display apparatus 100 may extract information on the photographing places of the image contents using EXIF information on the longitude/latitude included in the image contents. The display apparatus 100 may display a pre-stored map application or map image, and display the image contents by overlaying icons in the form of a flag on corresponding regions on the displayed map based on the information on the photographing places of the image contents.

The user may select one icon 1201 from the icons displayed on the photographing places of the image contents on the map using the terminal device or a remote control device. That is, the user may firstly select an image content photographed in a specific place corresponding to the area on which the selected icon is located by selecting the icon. In this case, the range of the displayed map may be determined to display a part or entirety of the photographing places of the image contents. For example, when the photographing places of the image contents are limited to Korea, the displayed map may be a Korean map. In addition, when the photographing places of the image contents are located all over the world, the displayed map may be a map of the world. The user may select an image content photographed in a corresponding region firstly by selecting an icon displayed on the region in a predetermined range on the displayed map. For example, when the displayed map is a map of the world as shown in FIG. 12A, the user may firstly select an image content photographed in a specific continent or a specific country.

FIG. 12B is a view showing a screen after an image content photographed in a region in a predetermined range is firstly selected. For example, the user may select an icon displayed on Australia on the map of the world to identify image contents photographed in Australia, and may enter a screen displaying the Australian map as shown in FIG. 12B. In response to the user entering the screen displaying the Australian map, thumbnail images 1202, 1203, and 1204 regarding some of the image contents photographed in regions of Australia, and icons 1205, 1206, and 1207 for entering a screen to enjoy the image contents photographed in the corresponding regions may be displayed in the proximity of the corresponding photographing regions. Accordingly, the user can intuitively identify the regions the image contents were photographed in on the map.

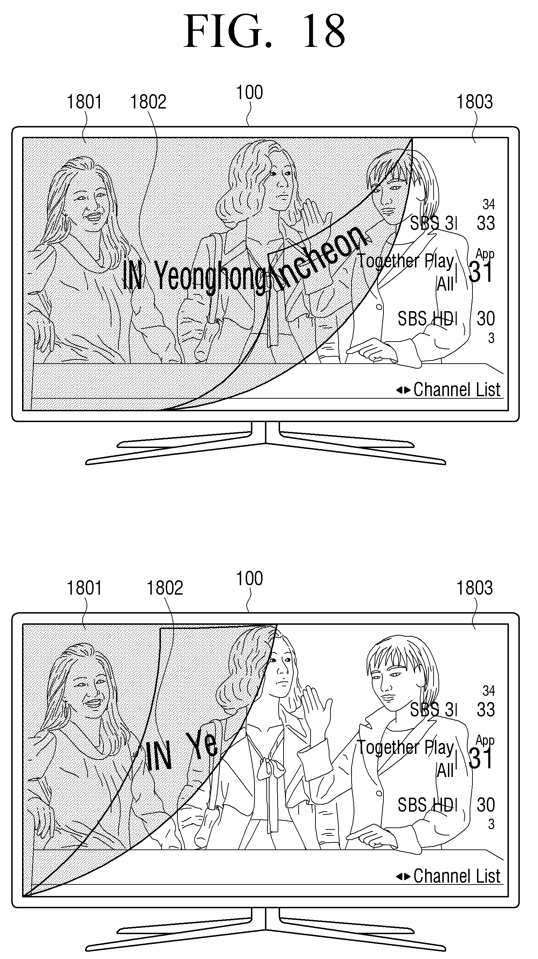

FIGS. 13 and 18 are views to illustrate a variation content which is reproduced on a virtual channel in the form of a slide show according to various exemplary embodiments.

Herein, the virtual channel is a channel which is generated in the display apparatus 100 by allocating a virtual channel number in order to enhance user's accessibility to a corresponding variation content, and the user may enter the virtual channel through zapping like a normal physical channel.

Referring to FIG. 13, the variation content may be configured by various templates #1, #2, and #3. The image content may be arranged on a certain area of the template screen, and content information included in the arranged image content or additional information added in the display apparatus 100 may be displayed with the image content.

In template #1, the image content is arranged on a certain area 1301 on the screen and the content information is displayed on another area 1305. The content information may be information such as a comment inputted by the user regarding the image content, a title of the image content, etc.

In template #2, a part of the image content is arranged on a certain area 1302 on the screen in a predetermined shape, and information on a photographing time and a photographing place which is extracted from the EXIF information of the image content may be displayed on another area 1306.

In template #3, a plurality of image contents photographed at the same date and in the same place may be arranged on a plurality of areas 1303, 1304 on the screen based on the EXIF information, and information on the photographing time and the photographing place of the image contents may be displayed on another area 1307. That is, like template #3, the template may be configured to include a plurality of image contents in a single variation content.

The plurality of variation contents configured by the above-described various templates may be processed as images in the form of a slide show, and may be outputted in sequence through a predetermined virtual channel. Specifically, in response to a predetermined time elapsing after the variation content configured by template #1 was displayed, a predetermined effect may be generated and a new variation content configured by template #2 may be displayed. For example, in response to the predetermined time elapsing after the variation content configured by template #1 was displayed, the variation content configured by template #1 fades out and the new variation content configured by template #2 fades in. Alternatively, the new variation content configured by template #2 may be displayed, pushing the present variation content configured by template #1 in one direction.

In addition, in response to a predetermined time elapsing after the variation content configured by template #2 was displayed, a predetermined effect may be generated and a new variation content configured by template #3 may be displayed. In addition, the image contents included in each of templates #1, #2, and #3 may be changed every time the user enters the virtual channel, and the order of the variation contents may also be changed according to a predetermined criterion or randomly.

Each of the templates may be generated by using templates stored in the variation content information database 32-4 or applying templates purchased on a web by the user.

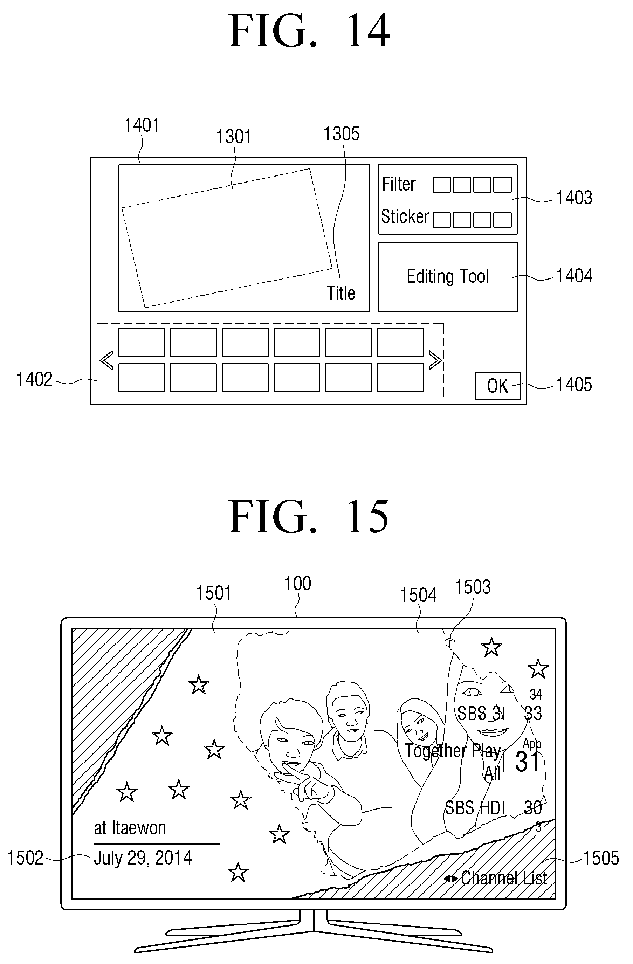

FIG. 14 is a view to illustrate an editing screen for editing a template according to an exemplary embodiment.

The processor 140 may edit a variation content according to a user command. For example, the user may enter an editing mode regarding the variation content by selecting a specific icon displayed on a certain area of the variation content, and the editing screen for editing the variation content may be provided in the editing mode as shown in FIG. 14.

The editing screen may display the variation content 1301, 1305 on a certain area 1401, and may provide an effect tool 1403 to give a specific effect to the variation content and an edit tool 1404 to edit arrangement, shape, or color of the template configuring the variation content, a size of the image content, and information extracted from the metadata and displayed. In addition, the editing screen may include a selection area 1402 which displays a plurality of variation contents as thumbnail images in order for the user to select a variation content to edit.

In response to a predetermined event, for example, a user command to enter the editing screen of the variation content, being inputted, the display apparatus 100 may display the editing screen of the variation content. The user may edit the variation content using the effect tool 1403 and the edit tool 1404 on the editing screen, and, in response to the user pressing an OK button 1405, a content in which the variation content is edited may be generated and stored. Herein, the content which is newly generated by editing the variation content will be referred to as an edit content. The generated edit content may be substituted for the existing variation content.

Through the editing screen, the configuration of the template such as arrangement, shape, or color of the template may be edited. As the edited template is stored, a new template may be added or the existing template may be replaced with the edited template.

FIGS. 15 to 18 are views illustrating variation contents according to various exemplary embodiments.

As shown in FIG. 15, an image content 1504 may be processed to include a part of a variation content on a predetermined area 1503 of at least one template from among predetermined templates, and may be displayed on a virtual channel (for example, channel 31). Information on a photographing place and a photographing date 1502 of the image content 1504 may be extracted from metadata of the image content 1504 and may be displayed on another area 1501. For example, the display apparatus 100 may search an address corresponding to the corresponding longitude/latitude based on EXIF information of the longitude/latitude extracted from the metadata of the image content 1504, and, in response to the searched address indicating "Itaewon, Hannam-dong, Seoul," may display the information on the photographing place like "at Itaewon" along with the image content 1504.

In addition, a channel selection menu 1505 for selecting a channel may be displayed on the border area of the screen where the variation content is displayed.

A plurality of variation contents may be generated and displayed on the virtual channel in the form of a slide show. In this case, a predetermined effect and background music may be provided with the variation contents, and the user may set and change the effect and the background music applied to the slide show according to a user's taste. The effect and the background music recited herein may be provided by an existing template or may be additionally uploaded from the terminal device into the display apparatus 100 and used. In addition, the number of variation contents and a reproducing time of each of the variation content may be adjusted according to the running time of the background music.

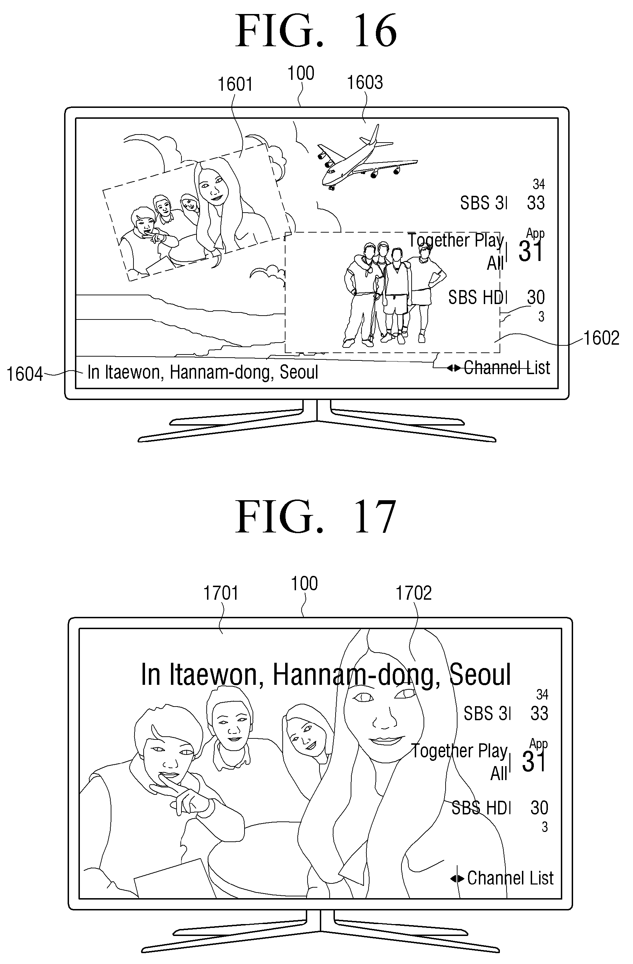

As shown in FIG. 16, a plurality of image contents 1601, 1602 may be included in predetermined areas of a template 1603, and may be displayed. In this case, the plurality of image contents 1601, 1602 may be inserted into a single template when at least one piece of information included in the metadata of the image contents such as a photographing date or a photographing place is the same. For example, the image contents 1601, 1602 having the same photographing place, "Itaewon, Hannam-dong, Seoul," are selected from the plurality of image contents, and may be configured by a single template. In this case, the information on the photographing place may be displayed on a certain area 1604 of the template 1603.

In addition, an image content 1701 may not be configured by a template and may be displayed as a full screen as shown in FIG. 17. In this case, at least one piece of information of information included in the metadata like "IN Itaewon, Hannam-dong, Seoul" may be overlapped with a certain area 1702 of the image content 1701 displayed as the full screen, and displayed.

FIG. 18 is a view showing a variation content screen to which an animation effect is applied according to an exemplary embodiment. As shown in FIG. 18, at least one piece of information included in the metadata extracted from an image content 1803 may be included in a cover image 1801 having predetermined brightness and transparency. The cover image 1801 may be displayed on a certain portion 1802 of the image content 1803 where the image content is displayed in full screen. In this case, an animation effect showing that the image content 1803 may be applied. For example, there may be a representation of detaching or flipping the cover image 1801 in order to reveal or display the image content 1803.

As described above, the various variation contents may be displayed in the form of a slide show. In addition, a list for recommending a specific variation content may be displayed while the variation contents are being displayed. In response to the user selecting one or more variation contents from the recommendation list, the selected variation contents may be displayed first and in sequence. After the selected variation contents are displayed, existing variation contents scheduled to be displayed according to a predetermined content arrangement criterion may be displayed.

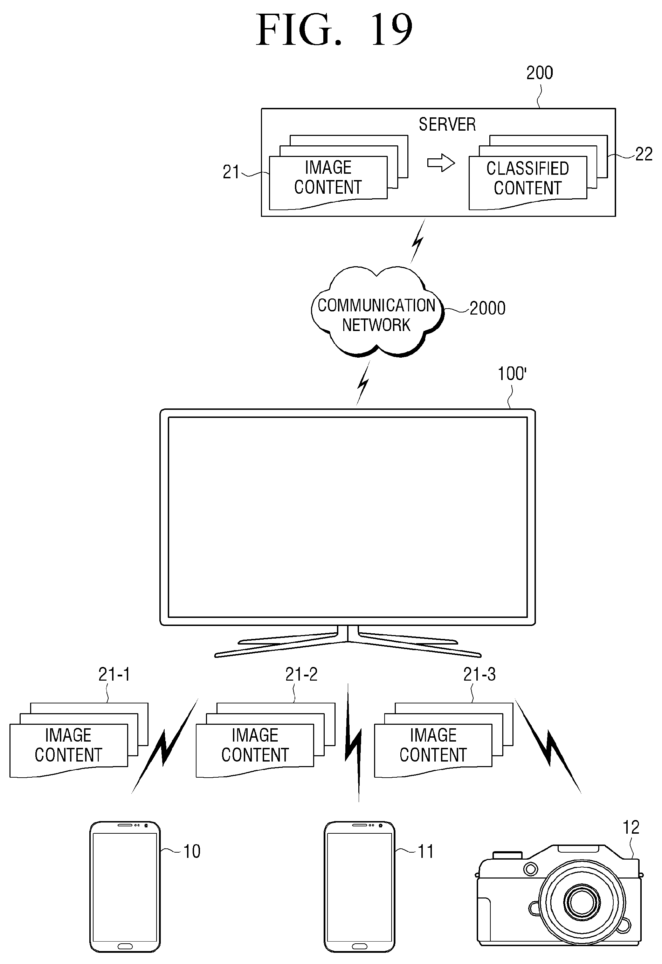

FIG. 19 illustrates a display apparatus which receives image contents from a plurality of terminal devices according to an exemplary embodiment.

The display apparatus 100' according to the exemplary embodiment of FIG. 19 may be connected with an external server 200 through a communication network 2000. In response to the user turning on the display apparatus 100' and logging in the server 200 with a registered account, the login information may be stored in the display apparatus 100', and afterward the display apparatus 100' and the server 200 may be connected with each other without a separate login process. Image contents transmitted from the plurality of terminal devices 10, 11, 12 to the display apparatus 100' may be transmitted to the server 200 through the communication network 2000 in response to a predetermined event occurring. In this case, in response to the image contents 21-1, 21-2, and 21-3 being received from the display apparatus 100', the server 200 may store the received image contents 21, and transmit a content 22 which is generated by classifying the stored image contents 21-1, 21-2, and 21-3 according to a predetermined criterion to the display apparatus 100'. For example, the server 200 may classify the image contents into a plurality of groups according to the predetermined criterion using metadata included in the received image contents, and configure at least one of the image contents classified into the groups using a predetermined template, and transmit the image content to the display apparatus 100'.

That is, the display apparatus 100 of FIGS. 1 to 3 may generate contents using various modules stored in the storage 130. However, the display apparatus 100' of FIG. 19 may transmit the received image contents to the server 200 through the communication network 2000, and may receive a content which is generated by the server 200 using modules. Alternatively, the display apparatus 100' may transmit a content in which the image contents are classified according to a predetermined criterion to the server 200. In this case, the server 200 may only schedule the received contents without processing the received contents. That is, the display apparatus 100' may transmit the image contents received from the terminal devices to the server 100 without processing the image contents. In addition, the display apparatus 100' may generate a content by classifying the image contents received from the terminal devices according to a predetermined criterion, and transmit the content to the server 200.

The server 200 may function as a server for providing a cloud computing function. The server 200 which provides the cloud computing function may establish an infrastructure which provides integrating and classifying functions of metadata of image contents to integrate and manage the metadata of the image contents, and provides the metadata according to a user's environment. In addition, the server 200 may provide an upload/download function of image contents, and may perform an open API providing function.

In response to a connection request, the server 200 may allow only an authorized display apparatus to be connected thereto. Specifically, the server 200 may authenticate a display apparatus using a MAC address and a service ID of the display apparatus, and may authenticate the display apparatus by receiving an input of a log-in ID.

The image contents may be transmitted through the display apparatus 100' connected to the server 200, or may be transmitted from terminal devices directly connected with the server 200. In this case, a comment added by the user and an effect applied to the image content may be transmitted with the image contents such as photos or videos.

A content which is generated by classifying the image contents stored in the server 200 according to a predetermined criterion may be stored in the form of a project file. Information included in the project file may include an arrangement order of used contents, an added comment, edit information of a variation content, and time line information, and the project file generated in this way may be edited by the user.

The communication network 2000 may be configured to communicate in a wired or wireless manner, and may be implemented by using various communication networks such as a Personal Area Network (PAN), a Local Area Network (LAN), a Metropolitan Area Network (MAN), a Wide Area Network (WAN), etc. In addition, the communication network 2000 may be the well-known World Wide Web (WWW), and may use wireless transmission technology used in short-distance communication such as Infrared Data Association (IrDA) or Bluetooth.

Since various modules for processing the image contents, that is, the configuration of the CMS module 30, is included in the server 200 rather than the display apparatus 100', the server 200 may be referred to as a CMS server.

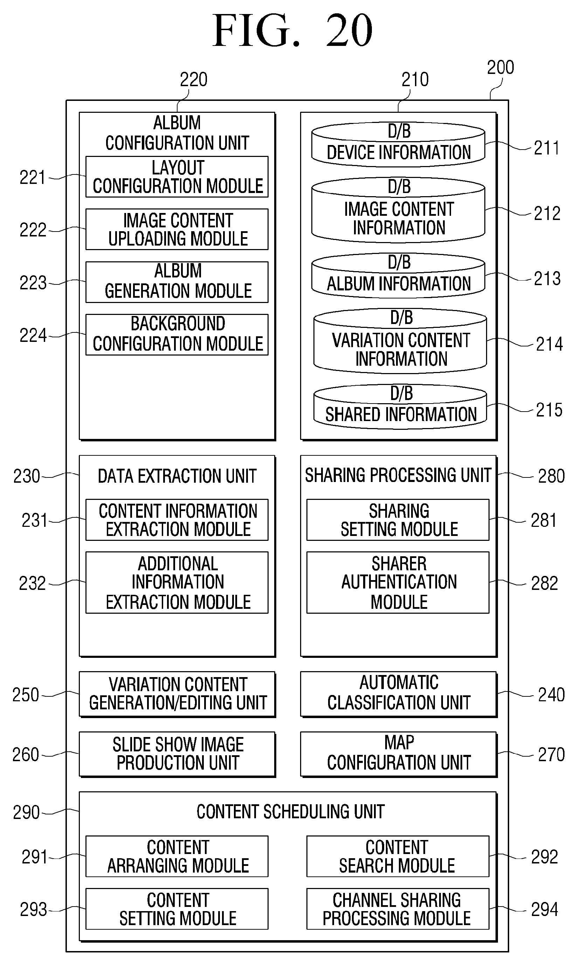

FIG. 20 is a view to illustrate the configuration of the CMS server according to an exemplary embodiment.

As shown in FIG. 20, the CMS server 200 may include a database unit 210, an album configuration unit 220, a data extraction unit 230, an automatic classification unit 240, a variation content generation/editing unit 250, a slide show image production unit 260, a map configuration unit 270, a sharing processing unit 280, and a content scheduling unit 290. That is, the CSM server 200 may perform the functions performed by the CMS module 30 of the storage 140 shown in FIG. 3 on behalf of the CMS module 30.

The album configuration unit 220 may be configured to generate and manage an album for sharing image contents on an album basis. In order to the user configuring a single album by selecting a specific image content or in response to a specific image content being classified into a single group according to a predetermined criterion, the album configuration unit 220 may logically group the selected or classified image content, and store information on the grouped image content in an album information database 213. That is, the album configuration unit 220 may generate an album with image contents which are selected according to a user's request or image contents which are classified according to a predetermined criterion.

The album configuration unit 220 may configure an album using a layout configuration module 221 for configuring a layout of an album, a photo uploading module 222 for receiving image contents from the display apparatus 100', and an album generation module 223 and a background configuration module 224 for generating an album and configuring the background of the album.

The album configuration unit 220 may process the content in which the image contents are classified according to the predetermined criterion by executing the layout configuration module 221. In addition, by executing the layout configuration module 221, a user editing tool may be provided in order for the user to edit a template or image content on the screen of the processed image contents. Accordingly, layout information configured by user's editing may be stored in the image content information database 212. In this case, the layout information may include information on a size, a location, an aspect ratio, a resolution, a shape, a form and direction of the image content.

The album configuration unit 220 may upload the image contents from the users' terminal devices to share the image contents and store the image contents in the image content information database 212 by executing the image content uploading module 222. In this case, in response to the user selecting specific image contents and grouping them, the selected image contents may be grouped into a single album, and may be uploaded.

The data extraction unit 230 may extract metadata included in image content files in order to automatically classify the image contents uploaded and stored in the image content information database 212 according to a user's selection condition or a predetermined criterion. The data extraction unit 230 may include a content information extraction module 231 and an additional information extraction module 232.

The data extraction unit 230 may extract information included in the content such as EXIF information by executing the content information extraction module 231. The EXIF information may include a photographing date, information on a geographical location where the image contents are photographed such as a photographing place (longitude/latitude), information on a file capacity of the image content, type information of a photographing device, or user information of a photographing device.

After extracting the content information by means of the content information extraction module 231, the data extraction unit 230 may additionally extract a variety of information related to the image contents by executing the additional information extraction module 232. The additionally extracted additional information may include an uploading time of the image content, an accessing time and the number of times of accessing, color information, editing information, etc. In this case, the color information is result of analyzing color included in the image content, and may be used as information for classifying the same kind of image contents.

In addition, the automatic classification unit 240 may filter the image contents by automatically classifying the image contents according to a predetermined criterion or user's setting using the information extracted by the data extraction unit 230. In this case, the automatic classification unit 240 may set the criterion according to a classification item, and may classify image contents satisfying a specific condition according to the set criterion. That is, the automatic classification unit 240 may set the predetermined criterion to items such as a photographing date, a photographing region, a type of a terminal device, a file size, color information, information on an object recognized in the image content, and device identification information using the information extracted by the data extraction unit 230.

The variation content generation/editing unit 250 may generate a variation content in which image contents are configured by a predetermined template, and edit the variation content. The variation content generation/editing unit 250 may provide the user with various tools for generating a variation content by combining the image contents with various templates stored in a variation content information database 214, and editing the variation content.

The slide show image production unit 260 may provide a plurality of variation contents on a virtual channel in the form of a slide show. The slide show image production unit 260 may produce various slide show images by applying an effect, such as toggling between screens, an animation, music, to the plurality of variation contents.

The map configuration unit 270 may extract information on a photographing place (longitude/latitude) from the EXIF information included in a photographed photo or video through geo-tagging using a GPS embedded in the terminal device. The map configuration unit 270 may display photos or images on areas corresponding to photographing places of the photos or images on a template which is configured in the form of a map including a map image or a map application having a range of a predetermined region, based on the extracted information.

The sharing processing unit 280 may provide various functions related to sharing so as to share the image contents received from the display apparatus 100' and a content in which the image contents are classified according to a predetermined criterion with a plurality of users. The sharing processing unit 280 may include a sharing setting module 281 and a sharer authentication module 282.

The sharing processing unit 280 may set a user who uploads image contents by executing the sharing setting module 281. Information on the set user (that is, a sharer) may be stored in a shared information database 215. Accordingly, a registering process of the terminal device of the corresponding user for the CMS server 200 may be performed. In addition, the sharing processing unit 1280 may determine who will share an album generated by the album configuration unit 220 or a variation content generated by the variation content generation/editing unit 250 by executing the sharing setting module 281. Accordingly, the CMS server 200 may determine who will share the image content (terminal device) on a basis of an album.

The sharing processing unit 280 may determine whether the user who uploads the image contents is a user set as a sharer or not by executing the sharer authentication module 282. To achieve this, the sharing processing unit 280 may extract device information included in EXIF information of image contents or user information received from the display apparatus 100 using the sharer authentication module 282, and may identify information on a user or terminal device requesting uploading of the image contents based on the extracted information. This identification may be achieved through a device information database 211. In this case, the sharing processing unit 280 may compare user information or device information with sharer information stored in a shared information database 215 or a device information database 211, and determine whether the user is authorized to share the image contents.

The content scheduling unit 290 may arrange and schedule the variation contents in the form of a slide show to be displayed on the virtual channel of the display apparatus 100' in various ways. Specifically, the content scheduling unit 290 may arrange contents, search contents, set a channel, and process channel sharing. These may be done by a content arranging module 291, a content search module 292, a content setting module 293, and a channel sharing processing module 294, respectively. In this case, the variation contents displayed on the virtual channel may include a content which is received from another display apparatus connected with the display apparatus 100' as well as a content which is produced in the corresponding CSM server 200. The variation contents to be displayed on the virtual channel may be arranged according to priority, and the priority may be allocated by various logics such as in order of a recently produced content, a recently shared content, or a variation content which is reproduced a small number of times.

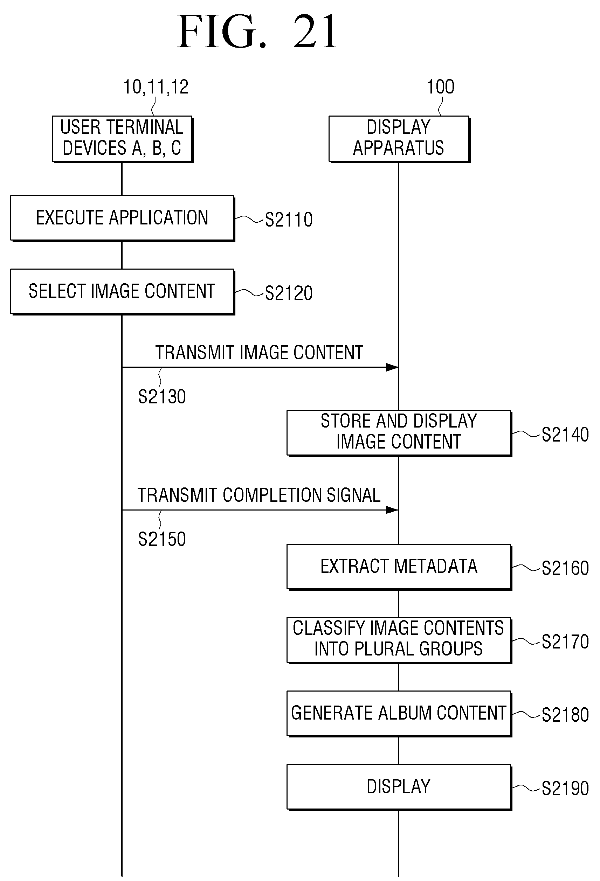

FIG. 21 is a flowchart to illustrate a process of displaying a content in which image contents are classified according to a predetermined criterion according to an exemplary embodiment.

FIG. 21 illustrates a process of sharing image contents on the display apparatus 100 by three users using their respective terminal devices A 10, B 11, and C 12.

First, the users may connect the terminal devices A 10, B 11, and C 12 with the display apparatus 100 by executing applications installed in the terminal devices A 10, B 11, and C 12 for sharing image contents (S2110). In this case, in response to the terminal device A 10 establishing a communication session with the display apparatus 100 first by executing the application, an application for sharing image contents in the display apparatus 100 is executed. Thereafter, in response to the terminal devices B 11 and C 12 executing the applications, the terminal devices B 11 and C 12 establish communication sessions with the display apparatus 100 and thus share the image contents.

The three users may select image contents to be shared on the applications executed in the terminal devices A 10, B 11, and C 12 (S2120). The selected image contents may be transmitted to the display apparatus 100 (S2130), and the transmitted image contents may be stored in the display apparatus 100 and simultaneously may be displayed on the screen in the form of thumbnails (S2140).

Thereafter, in response to a selection completion signal being transmitted from one of the plurality of terminal devices A 10, B 11, C 12 as a predetermined event (S2150), a content in which the received image contents are classified according to a predetermined criterion is displayed on the display apparatus 100. In this case, the predetermined event may be an event in which the terminal device A 10 which has established the communication session with the display apparatus 100 first transmits the selection completion signal. However, the predetermined event may be set to an event in which all of the terminal devices A 10, B 11, and C 12 transmit the selection completion signal.

Specifically, in response to a predetermined event receiving the selection completion signal occurring, the display apparatus 100 may extract metadata from the received image contents (S2160), and classify the image contents into a plurality of groups according to the predetermined criterion (S2170). Herein, the predetermined criterion may include a photographing date of the image content, a photographing place, a comment tagged with the image content, recognition information of an object included in the image content, device identification information, etc.

The display apparatus 100 may generate an album content in which the groups of the classified image contents are configured by a template mapped in the form of an album (S2180), and display the album content (S2190). Thereafter, the generated album content may be provided through a virtual channel on the display apparatus 100, and a variation content in which the image contents are configured by various templates may be provided on the virtual channel.

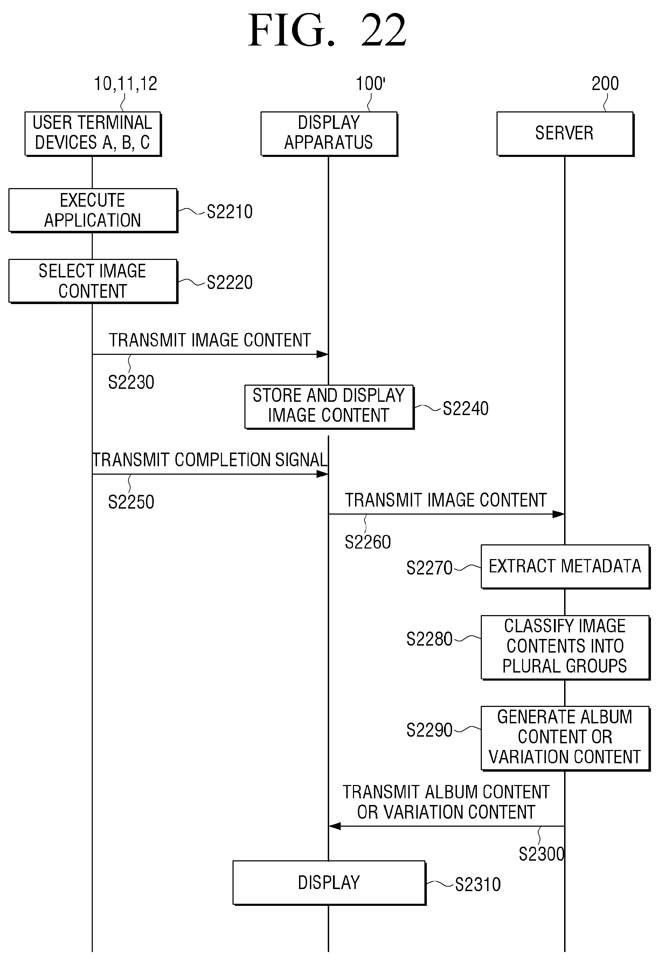

FIG. 22 is a flowchart to illustrate a process of displaying a screen in which image contents are classified according to a predetermined criterion according to another exemplary embodiment.

In the exemplary embodiment of FIG. 22, a server 200 which is connected with a display apparatus 100' through a communication network transmits a content in which image contents are classified according to a predetermined criterion to the display apparatus 100'. Hereinafter, the same operations as in FIG. 21 will not be explained.

As shown in FIG. 22, in response to a selection completion signal indicating that image contents to be shared have been selected being transmitted from the terminal device A 10 to the display apparatus 100' as a predetermined event (S2250), the display apparatus 100' may transmit the received image contents to the CMS server 200 (S2260).

The CMS server 200 may extract metadata from the received image contents (S2270), and classify the image contents into a plurality of groups according to a predetermined criterion (S2280). Herein, the predetermined criterion may include a photographing date of the image content, a photographing place, a comment tagged with the image content, recognition information of an object included in the image content, etc.

The CMS server 200 may generate an album content in which the groups of the classified image contents are configured by a template mapped in the form of an album (S2290), and transmits the generated album content to the display apparatus 100' (S2300). Thereafter, the generated album content may be provided through a virtual channel on the display apparatus 100' (S2310). The CMS server 200 may transmit a variation content in which the image contents are configured by various templates to the display apparatus 100', and the display apparatus 100' may provide the variation content transmitted from the CMS server 200 to the user on the virtual channel.

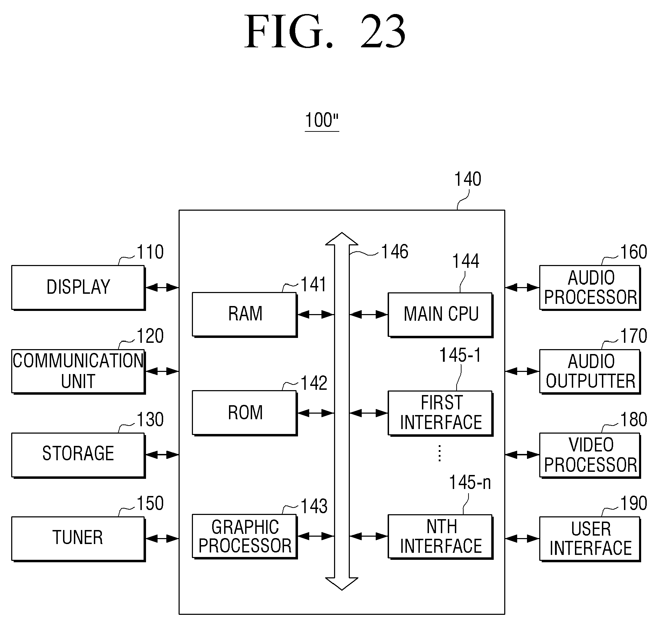

FIG. 23 is a block diagram showing a configuration of a display apparatus in detail according to another exemplary embodiment. As shown in FIG. 23, the display apparatus 100" according to another exemplary embodiment includes a display 110, a communication unit 120, a storage 130, a processor 140, a tuner 150, an audio processor 160, an audio outputter 170, a video processor 180, and a user interface 190. Herein, the same elements as in FIGS. 1 to 3 will not be explained.

The processor 140 controls the overall operations of the display apparatus 100" using various programs stored in the storage 130.

As shown in FIG. 23, the processor 140 includes a Random Access Memory (RAM) 141, a Read Only Memory (ROM) 142, a graphic processor 143, a CPU 144, first to nth interfaces 145-1 to 145-n, and a bus 146. In this case, the RAM 141, the ROM 142, the graphic processor 143, the CPU 144, and the first to nth interfaces 145-1 to 145-n may be connected with one another via the bus 146. However, the processor 140 is not limited to this configuration. The processor 140 may include various devices which perform the same or similar functions as or to those of the RAM 141, the ROM 142, the graphic processor 143, and the CPU 144.

The ROM 142 stores a set of commands for booting a system. The CPU 144 copies various application programs stored in the storage 130 into the RAM 141, and performs various operations by executing the application programs copied into the RAM 141. For example, the CPU 144 may copy various modules included in an image content processing module unit stored in the storage 130 into the RAM 141, and generate a new content by classifying and processing image contents received from the plurality of terminal devices by executing the modules copied into the RAM 141.

The graphic processor 143 generates a screen including various objects such as an icon, an image, a text, and the like, using a calculator (not shown) and a renderer (not shown). The calculator calculates attribute values of the objects to be displayed such as coordinate values, shape, size, color, and the like of the objects according to the layout of the screen. The renderer generates the screen of various layouts including the objects based on the attribute values calculated by the calculator.

The CPU 144 accesses the storage 130 and performs booting using an O/S stored in the storage 130. In addition, the CPU 144 performs various operations using various programs, contents, and data stored in the storage 130.

The first to nth interfaces 145-1 to 145-n are connected with the above-described various elements. One of the interfaces may be a network interface which is connected with an external device through a network.

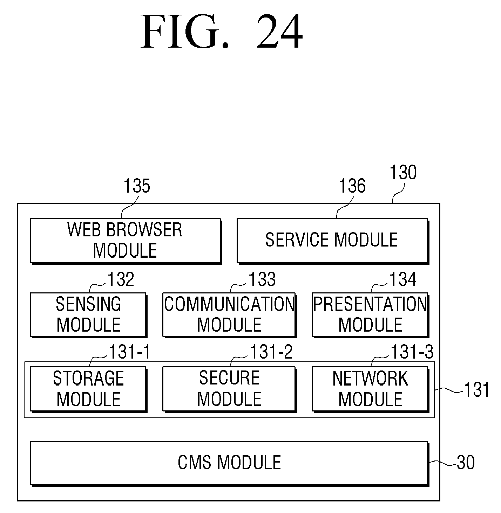

The storage 130 is configured to store the image contents received from the plurality of terminal devices, a variation content which is generated by processing the image contents according to a predetermined template, and an edit content in which the variation content is edited, and additionally store various modules for driving the display apparatus 100". In particular, the configuration of the storage 130 will be explained in detail below with reference to FIG. 24.

Referring to FIG. 24, the storage 130 may store software including a base module 131, a sensing module 132, a communication module 133, a presentation module 134, a web browser module 135, a service module 136, and a CMS module 30.

The base module 131 refers to a module which processes signals transmitted from hardware included in the display apparatus 100", and transmits the signals to an upper layer module. The base module 131 includes a storage module 131-1, a secure module 131-2, and a network module 131-3. The storage module 131-1 is a program module which manages a database or a registry. The secure module 131-2 is a program module which supports certification, permission, secure storage, etc. regarding hardware, and the network module 131-3 is a module for supporting network connection and includes a DNET module, an UPnP module, etc.

The sensing module 132 is a module which collects information from various sensors, and analyzes and manages the collected information.

The communication module 133 is a module for communicating with an external device. The communication module 133 may include an IR communication module and an RF communication module, and may further include a messaging module and a telephony module.

The presentation module 134 is a module for configuring a display screen. The presentation module 134 may include a multimedia module for reproducing and outputting a multimedia content, and a UI rendering module for performing UI and graphic processing.

The web browser module 135 is a module which performs web browsing and accesses a web server. The web browser module 135 may include various modules such as a web view module configuring a web page, a download agent module for downloading, a bookmark module, a webkit module, etc.

The service module 136 is a module which includes various applications for providing various services. Specifically, the service module 136 may include various program modules such as an SNS program, a content reproduction program, a game program, an electronic book program, a calendar program, an alarm management program, other widgets, or etc.

Referring back to FIG. 23, the tuner 150 is configured to tune and select broadcast signals of a predetermined channel in broadcast signals received at the display apparatus 100".

The audio processor 160 is an element for processing audio data. The audio processor 160 may perform various processing operations such as decoding, amplification, noise filtering, etc. with respect to the audio data. The audio processor 160 may include a plurality of audio processing modules for processing audios corresponding to a plurality of contents.

The audio outputter 170 is configured to output the audios and may be implemented by using a speaker, etc.

The video processor 180 is an element for processing various broadcast contents received through the tuner 150. The video processor 180 may perform various image processing operations such as decoding, scaling, noise filtering, frame rate conversion, resolution conversion, etc. with respect to the contents. The video processor 180 may include a plurality of video processing modules for processing videos corresponding to a plurality of contents.

The user interface 190 is configured to detect a user interaction for controlling the overall operations of the display apparatus 100". In particular, the user interface 190 may include various interaction detection devices such as a microphone (not shown), an infrared ray signal receiver (not shown), etc.

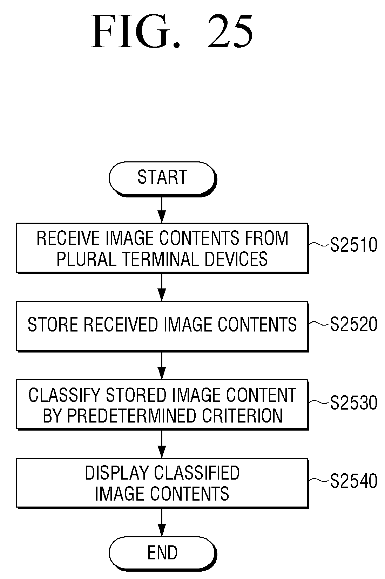

FIG. 25 is a flowchart to illustrate a control method of the display apparatus according to an exemplary embodiment.

First, the display apparatus receives image contents from a plurality of terminal devices (S2510). Thereafter, the display apparatus stores the received image contents (S2520).

In this case, the display apparatus may display the received image contents.

Thereafter, the display apparatus classifies the image contents according to a predetermined criterion (S2530). In this case, the display apparatus may classify the image contents into a plurality of groups according to the predetermined criterion using metadata included in the image contents. Thereafter, the display apparatus may display the classified image contents (S2540). Each of the classified groups may be inserted into a template which is configured in the form of an album and displayed. In this case, the predetermined criterion may be set based on content information included in the image contents. Herein, the content information may include at least one of a photographing date of the image content, a photographing place of the image content, information on face recognition included in the image content, a comment tagged with the image content, information on an object recognized in the image content, and device identification information. In addition, the predetermined criterion may be set based on information which is added to the image contents by the display apparatus. Herein, the added information may include at least one of a time at which the image content is accessed, and a number of times the image content is accessed.

In this case, the display apparatus may extract information on the photographing places of the image contents using the metadata included in the image contents, and display the image contents on areas corresponding to the photographing places of the image contents on a template which is configured in the form of a map having a range of a predetermined region using the map configuration module. In addition, the display apparatus may generate a virtual channel for displaying the classified image contents, allocate channel identification information to the virtual channel so that the virtual channel is selected through the channel identification information, and display the classified image contents through the virtual channel in response to the virtual channel being selected.

In addition, in response to the virtual channel being selected by the user, a plurality of screens in which at least one of the stored image contents is inserted into a predetermined template may be displayed on the virtual channel as a slide show. In addition, the stored image contents may be displayed in the form of thumbnails including identifiers for distinguishing the image contents from one another according to devices.

The display apparatus may edit the image contents classified according to the predetermined criterion, for example, an album content which is a screen configured by a predetermined template, an album selection content, a variation content, etc. according to a user command.

According to various exemplary embodiments as described above, the plurality of users can easily share media contents with one another and enjoy a content which is produced in various forms by processing the shared contents.

The control method of the display apparatus according to various exemplary embodiments described above may be implemented as a program and stored in various recording media. That is, a computer program which is processed by various processors and execute the above-described various control methods may be stored in a recording media and used.

For example, a non-transitory computer readable medium which stores a program for performing the steps of: receiving image contents from a plurality of terminal devices, storing the received image contents, classifying the stored image contents according to a predetermined criterion, and displaying the classified image contents may be provided.

The non-transitory computer readable medium refers to a medium that stores data semi-permanently rather than storing data for a very short time, such as a register, a cache, a memory or etc., and is readable by an apparatus. Specifically, the above-described various applications or programs may be stored in the non-transitory computer readable medium such as a compact disc (CD), a digital versatile disk (DVD), a hard disk, a Blu-ray disk, a universal serial bus (USB), a memory card, a ROM or etc., and may be provided.

The foregoing exemplary embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

## Claims

1. A display apparatus comprising:
a display panel;
a communicator configured to communicate with a plurality of terminal devices, the communicator configured to receive image content from the plurality of terminal devices;
a storage configured to store the received image content; and
a processor configured to classify the stored image content according to a predetermined criterion and output the classified image content through the display panel.

2. The display apparatus of claim 1, wherein the processor is configured to insert the classified image content into a template configured in an album format comprising thumbnail images for a user to select an image content, and display the classified image content.

3. The display apparatus of claim 1, wherein the predetermined criterion is set based on content information included in the image contents.

4. The display apparatus of claim 3, wherein the content information comprises at least one of a photographing date of the image content, a photographing place of the image content, information on face recognition included in the image content, a comment tagged with the image content, information on an object recognized in the image content, and identification information of each device which transmits the image content.

5. The display apparatus of claim 1, wherein the predetermined criterion is set based on information added to the image content by the display apparatus.

6. The display apparatus of claim 5, wherein the added information comprises at least one of a time at which the image content is accessed, and a number of times of accessing the image content.

7. The display apparatus of claim 3, wherein the storage comprises a map configuration module configured to configure a map to display the image content through a map image or a map application, and
wherein the processor is configured to execute the map configuration module stored in the storage to display the map image or the map application having a range of a predetermined region, and display the image content on areas corresponding to the photographing places of the image content on the displayed map image or map application.

8. The display apparatus of claim 7, wherein the predetermined region is set or changed by the user.

9. The display apparatus of claim 1, wherein the processor is configured to generate a channel identification number, allocate the channel identification number to the classified image content, and, in response to the channel identification number being selected by the user, control to display the classified image content on a virtual channel corresponding to the channel identification number.

10. The display apparatus of claim 9, wherein, in response to the channel identification number being selected by the user, the processor is configured to control to display a plurality of screens in which at least one of the stored image content is inserted into a predetermined template on the virtual channel as a slide show.

11. The display apparatus of claim 1, wherein the processor is configured to display the stored image content as thumbnail images comprising identifiers distinguished from one another according to terminal devices which have transmitted the image content.

12. The display apparatus of claim 8, wherein, in response to the stored image content or the template into which the image content are inserted being selected by the user, the processor is configured to display an editing screen for editing the selected image content or template, edit the selected image content or template according to a user command, and store the edited image content or template in the storage.

13. A control method of a display apparatus, comprising:
receiving image content from a plurality of terminal devices;
storing the received image content;
classifying the stored image content according to a predetermined criterion; and
displaying the classified image content.

14. The control method of claim 13, wherein the displaying the classified image content comprises inserting the classified image content into a template configured in an album format comprising thumbnail images for a user to select an image content, and displaying the classified image content.

15. The control method of claim 13, wherein the predetermined criterion is set based on content information included in the image contents.
